# EUROPEAN PATENT APPLICATION

(11) **EP 4 270 836 A1**
(43) Date of publication of application: **01.11.2023**
(21) Application number: 21909501.5
(22) Date of filing: 23.12.2021
(51) Int. Cl.: H04L 5/00, H04W 24/02

(54) **NON-CONNECTED STATE POSITIONING METHOD AND APPARATUS, AND DEVICE**

(30) Priority: 23.12.2020 CN 202011540891
(71) Applicant: Vivo Mobile Communication Co., Ltd., Dongguan, Guangdong 523863 (CN)
(72) Inventor: ZHUANG, Zixun, Dongguan, Guangdong 523863 (CN); WANG, Yuanyuan, Dongguan, Guangdong 523863 (CN); SI, Ye, Dongguan, Guangdong 523863 (CN); SUN, Peng, Dongguan, Guangdong 523863 (CN); MO, Yitao, Dongguan, Guangdong 523863 (CN); WU, Huaming, Dongguan, Guangdong 523863 (CN)
(74) Representative: Winter, Brandl - Partnerschaft mbB
(86) International application number: PCT/CN2021/140735
(87) International publication number: WO 2022/135506

(57) **Abstract**

Embodiments of this application provide a non-connected state positioning method and apparatus, and a device, and pertain to the field of communications technologies. The method includes: receiving, by a terminal, first configuration information and/or second configuration information of an uplink positioning reference signal from a network-side device; and/or receiving, by the terminal, activation related information of an uplink positioning reference signal from the network-side device, where the activation related information includes activation information and/or deactivation information; and/or determining, by the terminal, a collision rule for an uplink positioning reference signal.

## Description

### CROSS-REFERENCE TO RELATED APPLICATIONS

This application claims priority to Chinese Patent Application No. 202011540891.1, filed in China on December 23, 2020, which is incorporated herein by reference in its entirety.

### TECHNICAL FIELD

This application pertains to the field of communications technologies, and specifically relates to a non-connected-state positioning method and apparatus, and a device.

### BACKGROUND

At present, a power-saving scheme for terminals is one of directions that have attracted much attention. However, for positioning requiring high power consumption, there is still no good solution to reduction of energy consumption. Also, no specific method for implementing idle (Idle)/inactive (inactive)-state uplink positioning is available. In a case that an area event, a periodic event, change of a camped-on cell, or disabling of a tracking area (Tracking Area, TA) occurs, how to obtain a configuration and update for an uplink positioning signal also needs to be resolved.

### SUMMARY

Embodiments of this application are intended to provide a non-connected-state positioning method and apparatus, and a device, so as to resolve the problem that there is still no specific method for non-connected-state uplink positioning.

According to a first aspect, an embodiment of this application provides a non-connected-state positioning method. The method is executed by a terminal, and the method includes:
receiving first configuration information and/or second configuration information of an uplink positioning reference signal from a network-side device;
   and/or
receiving activation related information of an uplink positioning reference signal from the network-side device, where the activation related information includes activation information and/or deactivation information;
   and/or
determining a collision rule for an uplink positioning reference signal.

According to a second aspect, an embodiment of this application provides a non-connected-state positioning method. The method is executed by a network-side device, and the method includes:
sending first configuration information and/or second configuration information of an uplink positioning reference signal to a terminal;
   and/or
sending activation related information of an uplink positioning reference signal to a terminal, where the activation related information includes activation information and/or deactivation information.

According to a third aspect, an embodiment of this application provides a non-connected-state positioning apparatus. The apparatus is applied to a terminal, and the apparatus includes:
a first receiving module, configured to receive first configuration information and/or second configuration information of an uplink positioning reference signal from a network-side device;
   and/or
a second receiving module, configured to receive activation related information of an uplink positioning reference signal from the network-side device, where the activation related information includes activation information and/or deactivation information;
   and/or
a first determining module, configured to determine a collision rule for an uplink positioning reference signal.

According to a fourth aspect, an embodiment of this application provides a non-connected-state positioning apparatus. The apparatus is applied to a network-side device, and the apparatus includes:
a first sending module, configured to send first configuration information and/or second configuration information of an uplink positioning reference signal to a terminal;
   and/or
a second sending module, configured to send activation related information of an uplink positioning reference signal to a terminal, where the activation related information includes activation information and/or deactivation information.

According to a fifth aspect, an embodiment of this application provides a terminal, including a processor, a memory, and a program stored in the memory and capable of running on the processor. When the program is executed by the processor, the steps of the method according to the first aspect are implemented.

According to a sixth aspect, an embodiment of this application provides a network-side device, including a memory, a processor, and a program stored in the memory and capable of running on the processor. When the program is executed by the processor, the steps of the method according to the second aspect are implemented.

According to a seventh aspect, an embodiment of this application provides a readable storage medium, where a program or instructions are stored in the readable storage medium, and when the program or the instructions are executed by a processor, the steps of the method according to the first aspect or the second aspect are implemented.

According to an eighth aspect, an embodiment of this application provides a computer program product, where the computer program product is stored in a non-transitory storage medium, and the computer program product is executed by at least one processor to implement the steps of the method according to the first aspect or the second aspect.

According to a ninth aspect, an embodiment of this application provides a chip, where the chip includes a processor and a communication interface, the communication interface is coupled to the processor, and the processor is configured to run a program or instructions to implement the method according to the first aspect or the second aspect.

According to a tenth aspect, an embodiment of this application provides a communication device, where the communication device is configured to implement the steps of the method according to the first aspect or the steps of the method according to the second aspect.

The embodiments of this application provide solutions to the problems of how to obtain and update a configuration of the uplink positioning reference signal, how to activate the uplink positioning reference signal, and how to address collision between the uplink positioning reference signal and other channels or services, so as to address the problems of configuration, activation, update, and collision for idle/inactive-state uplink positioning. This effectively implements idle/inactive-state uplink positioning and resolves the problem that idle/inactive-state uplink positioning cannot be implemented.

### BRIEF DESCRIPTION OF DRAWINGS

FIG. 1a is a schematic diagram of a relationship between an idle state, an inactive state, and a connected state;
FIG. 1b is a schematic diagram of a relationship between a system frame for sending uplink data by a terminal and a corresponding downlink frame;
FIG. 1c is a schematic diagram of a 2-step random access procedure;
FIG. 1d is a schematic diagram of the uplink positioning procedure;
FIG. 2a is a first schematic flowchart of a non-connected-state positioning method according to an embodiment of this application;
FIG. 2b is a second schematic flowchart of a non-connected-state positioning method according to an embodiment of this application;
FIG. 3a is a first schematic diagram of an application scenario according to an embodiment of this application;
FIG. 3b is a second schematic diagram of an application scenario according to an embodiment of this application;
FIG. 3c is a third schematic diagram of an application scenario according to an embodiment of this application;
FIG. 3d is a fourth schematic diagram of an application scenario according to an embodiment of this application;
FIG. 3e is a fifth schematic diagram of an application scenario according to an embodiment of this application;
FIG. 3f is a sixth schematic diagram of an application scenario according to an embodiment of this application;
FIG. 3g is a seventh schematic diagram of an application scenario according to an embodiment of this application;
FIG. 4 is a first schematic structural flowchart of a non-connected-state positioning apparatus according to an embodiment of this application;
FIG. 5 is a second schematic structural flowchart of a non-connected-state positioning apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, in the specification and claims, "and/or" represents presence of at least one of connected objects, and the symbol "/" in this specification usually indicates an "or" relationship between contextually associated objects.

It should be noted that techniques described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

In the embodiments of this application, the terminal may also be referred to as a terminal device or user equipment (User Equipment, UE), and the terminal may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like.

In order to better understand the solutions provided by this application, the following content is first described.

### 1. Idle/inactive/connected state

UE in an idle state has no radio resource control (Radio Resource Control, RRC) context on a network side. That is, parameters required for communication between the network side and the UE do not belong to a specific cell, and the network side neither knows whether the UE is present. A tracking area identifier list (Tracking Area Identifier list, TAI list) is allocated to the UE. From the perspective of a core network, a connection between a radio access network (Radio Access Network, RAN) side and the core network has been interrupted. In order to reduce power consumption, the UE is in a dormant state for most time, and data transmission cannot be performed. In a downlink, the UE in the idle state may be periodically woken up to receive a paging message (if any) from the network side. Mobility (Mobility) processing may be performed by the UE through cell reselection. In the idle state, the UE does not keep uplink synchronization with the network side. For switching from the idle state to a connected (Connected) state, an RRC context needs to be established between the UE and the network side only through random access (Random Access).

In an RRC_connected state, an RRC context can be established and all parameters required for communication are known to two entities (the UE and the network side). From the perspective of the core network, the UE is in a CN_connected state. A cell to which the UE belongs is already known, and has been configured with a destination device identifier, that is, a cell radio network temporary identifier (Cell-Radio Network Temporary Identity, C-RNTI), for transmitting signaling between the device and the network. In the connected state, mobility (Mobility) can be controlled by the network side, that is, the UE provides neighboring cell measurements for the network, and the network instructs the device to perform handover (handover). Uplink time synchronization may or may not exist. When there is data to be transmitted, uplink synchronization may be established through random access.

In LTE, only an idle state and a connected state are supported. A common scenario in practice is to use the idle state as a main sleeping state of the UE to save power. However, due to frequent transmission of small data packets in some smart phones, if the manner in LTE is used, there may be a large number of times of switching from the idle state to the connected state. Such switching increases signaling load and signaling delay. Therefore, in order to reduce signaling load and a waiting time, an RRC_INACTIVE (inactive state) state is introduced to NR.

In the RRC_INACTIVE state, an RRC context between a network side and a UE side is maintained. From the perspective of the core network, a connection between a RAN side and the core network remains, and therefore switching from the inactive state to the connected state is performed much fast, requiring no signaling from the core network. In addition, the UE is allowed to sleep in an idle state-like manner, and mobility processing is performed through cell reselection. Therefore, RRC_INACTIVE may be considered as a hybrid of the idle and connected states.

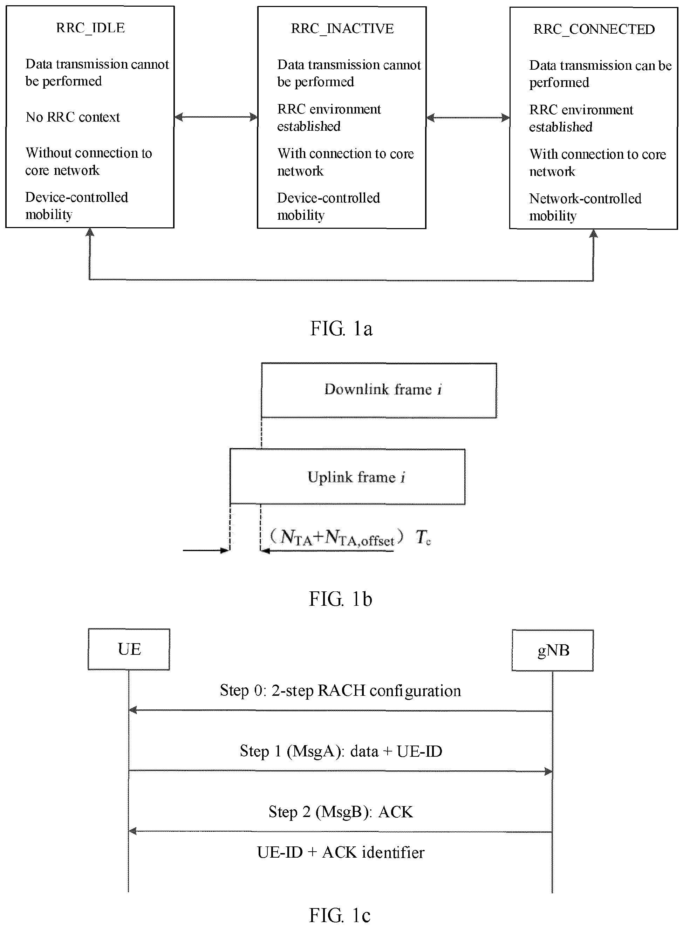

Specifically, a relationship between RRC_IDLE, RRC_INACTIVE, and RRC_CONNECTED is shown in FIG. 1a.

As can be seen from the foregoing description, an important difference between different states lies in a mobility (mobility) mechanism in use. Efficient mobility processing is a critical part of any mobile communication system. In the idle and inactive states, mobility processing is performed by the device through cell reselection; in the connected state, mobility processing is performed by the network side based on UE measurement.

For UEs in idle and inactive states, a common point lies in functions of PLMN selection, cell selection and reselection, and system message reception; and differences include the following several points: (1) In the idle state, the core network knows only a tracking area in which the UE is located, but does not know a specific pcell ID; therefore, paging is initiated based on a TA or a TA list. However, in the RRC inactive state, the NG-RAN knows which RNA the UE belongs to, and therefore pages the UE only in an RNA area. (2) In the idle state, a UE AS context is stored in the UE and NG-RNA; and (3) In the inactive state, the UE stores a NAS signaling connection of the control plane and a 5GC-NG-RAN connection of the user plane.

For UEs in the inactive state and the connected state, common points lie in that: (1) In the inactive state, a UE AS context is stored in the UE and NG-RNA. (2) A connection between the control plane and the user plane has been established, and therefore the core network usually considers that the UE is in the RRC connected state. Differences lie in that: (1) In the connected state, the NG-RAN knows a serving cell in which the UE is located; in the RRC inactive state, the NG-RAN knows which RNA the UE belongs to, and therefore pages the UE only in an RNA area. (2) In the RRC inactive state, the UE has functions of PLMN network search, cell reselection, and system message reception. (3) In the RRC connected state, the UE has the functions of uplink and downlink channel transmission and mobility (handover).

The UE enters the RRC connected state from the RRC inactive state.

The protocol specifies that in the following five scenarios, the UE returns to the RRC connected state: data to be sent on uplink; signaling procedure to be initiated at the NAS layer; response to RAN paging; notifying the network of no longer being in a RAN-based notification area; and periodic expiration of an update timer of the RAN-based notification area.

### 2. Uplink sounding reference signal (Sounding Reference Signal, SRS) in the connected state

Time domain types of uplink SRS include periodic, aperiodic, and semi-persistent, and configuration is made per SRS resource set. The pathloss reference signal is used for obtaining path loss estimation of SRS, including SSB of a serving cell, SSB of a neighboring cell, and a downlink positioning reference signal (Position Reference Signal, PRS)

Per SRS resource, SRS configurations of comb2, comb4, and comb8 are included. A comb size means the number of subcarrier spacings between two adjacent SRS resources in frequency domain, and the maximum cyclic shifts are 8, 12, and 6 respectively. The number of symbols and a start symbol of the SRS resource are also included. For aperiodic SRSs, a slot offset is included. For semi-persistent and periodic SRSs, periodicity and slot offset are included, where periodicity is in unit of slot. In addition, SRS spatial relation SRS-SpatialRelationInfoPos is also included, and a reference signal for the spatial relation may be SSB, CSI-RS, SRS of the serving cell, SSB of the neighboring cell, and downlink positioning reference signal PRS.

### 3. Related background of 4-step random access (4stepRACH) and 2-step random access (2stepRACH)

### 1) 4-step RACH, where the 4-step random access procedure includes:

(1) contention-based random access procedure (four-step random access (4-step RACH)); and
(2) contention-free random access procedure.

For the "contention-based random access procedure", the UE sends a message 1 (Msg1) (random access request) to the network side. After receiving the Msg1, the network side sends a message 2 (Msg2) (random access response (Random Access Response, RAR)) message to the UE, where the message carries uplink grant (uplink grant) information. The UE sends an Msg3 according to the uplink grant information in the Msg2. After receiving the Msg3, the network side sends a message 4 (Msg4) (for example, a contention resolution identifier) to the UE. After receiving the Msg4, the UE determines whether contention resolution is successful. If yes, the random access procedure is successful; if not, the random access procedure is reinitiated.

For the "contention-free random access procedure", the gNB allocates, for the UE, a dedicated random access channel (Random Access Channel, RACH) resource for the UE, and the UE sends the Msg1 (random access request) to the network side on the dedicated resource. After receiving Msg1, the network side sends an Msg2 (Random Access Response (Random Access Response, RAR)) message to the UE. However, when the dedicated RACH resources are insufficient, the gNB indicates the UE to initiate contention-based RA.

2) 2-step RACH, where as shown in FIG. 1c, the 2-step random access procedure includes:
Step 0: The network side configures new configuration information of two-step random access for the UE, for example, including information about transmission resources corresponding to the MsgA and the MsgB.
Step 1: The UE triggers a 2-step RACH procedure: sending request information (MsgA) to the network side, for example, by using a physical uplink shared channel (Physical Uplink Shared Channel, PUSCH). In addition, the UE may also send physical random access channel (Physical Random Access Channel, PRACH) information to the network side.
Step 2: The network side sends an acknowledgment message (MsgB) to the UE. If the UE fails to receive the MsgB, the UE resends an MsgA.

### 4. Uplink positioning procedure

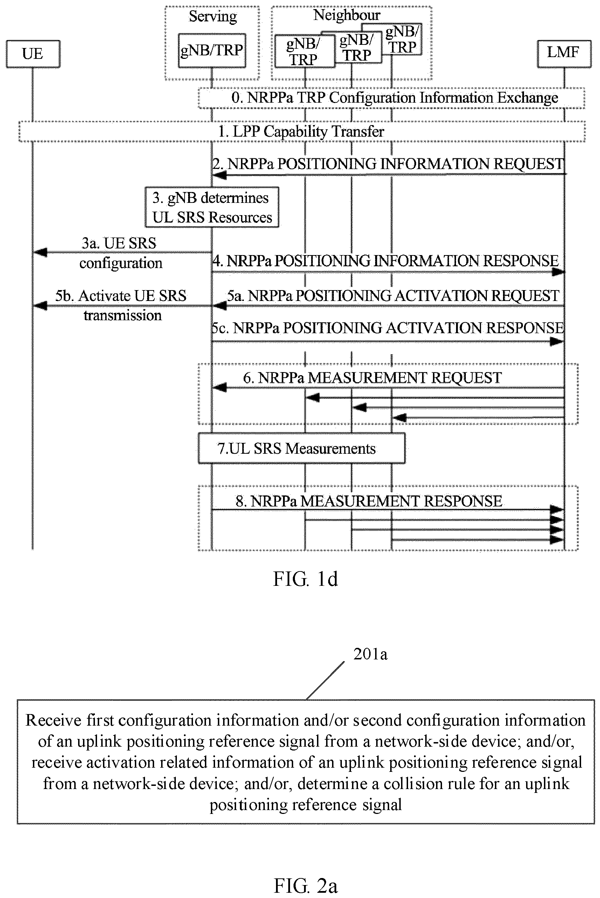

As shown in FIG. 1d, the uplink positioning procedure includes:
0. A location management function (Location Management Function, LMF) exchanges configuration information with a transmission and reception point (Transmission and Reception Point, TRP).
1. The LMF exchanges capability information with the UE.
2. NR positioning protocol A (NR Positioning Protocol A, NRPPa) positioning request.
3. The base station determines a UL SRS configuration.
4. NRPPa positioning response.
5. a. NRPPa positioning activation request; b. the base station activates SRS transmission; and c. NRPPa positioning activation response.
6. NRPPa measurement request.
7. The base station performs UL SRS measurement.
8. NRPPa measurement response.

In the existing technical solution, idle/inactive-state downlink positioning assistance data can be broadcast through poSIB, so as to perform measurement. In an idle/inactive-state uplink positioning method, measurement is performed by the base station, and the base station reports measurement information to the network side, not requiring the UE in the idle/inactive state to report. This resolves a problem of reporting a large amount of positioning measurement information during idle/inactive-state downlink UE-assisted positioning. However, there is still no specific method for implementing idle/inactive-state uplink positioning. In a case that an area event, a periodic event, change of a camped-on cell, or disabling of a TA occurs, how to obtain a configuration and update for an uplink positioning signal also needs to be resolved.

The following describes in detail a non-connected-state positioning method provided in the embodiments of this application by using specific embodiments and application scenarios thereof with reference to the accompanying drawings.

Referring to FIG. 2a, an embodiment of this application provides a non-connected-state positioning method. The method is executed by a terminal, and the method includes:

Step 201a: Receive first configuration information and/or second configuration information of an uplink positioning reference signal from a network-side device; and/or, receive activation related information of an uplink positioning reference signal from a network-side device; and/or, determine a collision rule for an uplink positioning reference signal.

The activation related information includes activation information and/or deactivation information. The activation information and deactivation information can be sent at the same time, and the deactivation information indicates a time offset relative to the activation information.

Further, the first configuration information and the second configuration information belong to different standard versions, or the first configuration information and the second configuration information are uplink positioning reference signal configuration information in different RRC connection states.

It should be noted that the first configuration information and the second configuration information may be uplink positioning reference signal configuration information of different standard versions. For example, the first configuration information is uplink positioning reference signal configuration information of a first standard version, and the second configuration information is uplink positioning reference signal configuration information of a second standard version; or, the first configuration information and the second configuration information may be uplink positioning reference signal configuration information of different RRC connection states. For example, the first configuration information is uplink positioning reference signal configuration information for a connected state, and the second configuration information is uplink positioning reference signal configuration information dedicated to a non-connected state. The first configuration information and the second configuration information may be totally the same. For example, content of the first configuration information is totally the same as that of the second configuration information, or values of the first configuration information and the second configuration information are totally the same. The first configuration information and the second configuration information may alternatively be partially the same, for example, content of the second configuration information is part of the first configuration information. The first configuration information and the second configuration information may alternatively be totally different, for example, values of the first configuration information and the second information values are totally different.

The non-connected-state positioning method provided in this embodiment of this application includes at least one of the following: a configuration method for the uplink positioning reference signal, an activation method for the uplink positioning reference signal, and a collision rule for the uplink positioning reference signal, which are described as follows.

Configuration method for the uplink positioning reference signal:

The terminal receives first configuration information and/or second configuration information that is of an uplink positioning reference signal and that is delivered by the network-side device.

The first configuration information and/or the second configuration information includes at least one of the following:
(1) resource set identification information, for example, a resource set ID;
(2) resource identification information, for example, a resource ID;
(3) time domain type information, for example, periodic, aperiodic, and semi-persistent;
(4) the number of symbols;
(5) frequency domain interval information, for example, comb size;
(6) time domain information;
(7) frequency domain information;
(8) frequency hopping information;
(9) sequence information, for example, sequence ID;
(10) repetition factor information;
(11) first resource information, including resource information of four-step contention-based random access (4-step Contention Based Random Access, 4-step CBRA) or resource information of four-step contention-free random access (4-step Contention Free Random Access, 4-step CFRA), where the first resource information is used to indicate a resource for sending request information by the UE, and the request information is used to request for a positioning configuration and/or positioning resource;
(12) second resource information, including resource information for 2-step CBRA or resource information for 2-step CFRA, where the second resource information is used to indicate a resource for sending request information by the UE, and the request information is used to request for a positioning configuration and/or positioning resource; and
(13) small data transmission (Small Data Transfer, SDT) resource information specific to the terminal.

In some implementations, the first configuration information and/or the second configuration information is associated with a synchronization signal block (Synchronization Signal and PBCH block, SSB), including at least one of the following:
(1) the resource set identification information is associated with an SSB index, for example, a resource set ID is associated with an SSB index;
(2) the resource identification information is associated with an SSB index, for example, a resource ID is associated with an SSB index; and
(3) the sequence information is associated with an SSB index, for example, the sequence ID is associated with an SSB index.

Further, the first configuration information and/or the second configuration information is associated with an SSB.

N SSBs are associated with one piece of the first configuration information and/or second configuration information, where if N<1, one SSB is mapped to 1/N consecutive pieces of valid first configuration information and/or second configuration information; if N>1, N SSBs are mapped to one piece of the first configuration information and/or second configuration information; or if N=1, the SSB is in a one-to-one correspondence to the first configuration information and/or the second configuration information.

In some implementations, the second configuration information may be used only for idle/inactive-state positioning.

In some implementations, the receiving the first configuration information and/or second configuration information of the uplink positioning reference signal from the network-side device includes at least one of the following:
(1) receiving the first configuration information and/or the second configuration information from the network-side device through a radio resource control release RRC release (RRC release) message;
(2) receiving the first configuration information and/or the second configuration information from the network-side device through a radio resource control release with suspend (RRC release with suspend) message;
(3) receiving the first configuration information and/or the second configuration information from the network-side device through a paging (paging) message;
(4) receiving the first configuration information and/or the second configuration information from the network-side device through a message 2, where the message 2 is message2 in the four-step random access procedure;
(5) receiving the first configuration information and/or the second configuration information from the network-side device through a message 4, where the message 4 is message4 in the four-step random access procedure;
(6) receiving the first configuration information and/or the second configuration information from the network-side device through a message B, where the message B is messageB in the two-step random access procedure;
(7) receiving the first configuration information and/or the second configuration information from the network-side device through downlink SDT;
(8) receiving the first configuration information and/or the second configuration information from the network-side device through a specific positioning information block (Position System Information Block, POSSIB), where the POSSIB carries a random access channel resource for positioning (Position, POS) request; and
(9) in a case that the terminal is in a connected state, receiving the first configuration information and/or the second configuration information from the network-side device, and storing the first configuration information and/or the second configuration information into the terminal. Optionally, a UE INACTIVE access stratum context (AS context) is present.

Further, in a case that the first configuration information and/or the second configuration information is received from the network-side device through the specific positioning information block POSSIB, the specific POSSIB includes a RACH resource used for sending POS request information by the terminal.

Further, in a case that third configuration information of uplink positioning reference signals is present on the terminal and the terminal enters an inactive state from a connected state, the third configuration information of all the uplink positioning reference signals is stored, and a radio resource other than that used for positioning is discarded.

The third configuration information may or may not be pre-configured. This embodiment of this application does not limit a manner of configuring the third configuration information. The third configuration information includes at least one of the following:
(1) resource set identification information, for example, a resource set ID;
(2) resource identification information, for example, a time domain type of resource ID such as periodic, aperiodic, or semi-persistent;
(3) power control information;
(4) spatial relation;
(5) the number of symbols;
(6) frequency domain interval information, for example, a comb size;
(7) time domain information;
(8) frequency domain information;
(9) frequency hopping information and sequence information, such as sequence ID; and
(10) repetition factor information.

Further, the time domain information includes at least one of the following:
(1) a periodicity of the uplink positioning reference signal;
(2) slot offset (slot offset);
(3) start symbol (symbol offset or start symbol);
(4) single frequency network (Single Frequency Network, SFN) initial time; and
(5) a cell list (list) and an SFN0 offset corresponding to each cell, where the cell list includes several cells, including one or more of reference cell, serving cell, camped-on cell, and other cells, and for example, the cells included in the cell list being identified by cell IDs, and the SFN0 offset of each cell relative to the reference cell, serving cell, and camped-on cell.

The frequency domain information includes at least one of the following:
(1) a bandwidth of the uplink positioning reference signal;
(2) a frequency domain reference point (Point A);
(3) a frequency domain position of a common resource block (Common Resource Block, CRB), namely a frequency domain position of CRB0;
(4) a frequency domain offset, for example, a start position (such as a start physical resource block (Physical Resource Block, Start PRB)) or an offset to carrier (offset to carrier) (relative to the position of CRB0);
(5) configuration of bandwidth part (Bandwidth Part, BWP); and
(6) carrier configuration.

In some implementations, before the receiving the first configuration information and/or second configuration information of the uplink positioning reference signal from the network-side device, the method further includes:
sending first request information to the network-side device, where the first request information is used to request the network-side device to send the first configuration information and/or the second configuration information.

The sending first request information to the network-side device includes at least one of the following:
(1) sending the first request information to the network-side device by using a specific preamble (specific preamble), where the specific preamble may be a specific contention-free preamble (ContentionFree-preamble), a predefined preamble, or a preamble for positioning;
(2) sending the first request information to the network-side device through a message 3, where the message 3 is message3 in the four-step random access procedure;
(3) sending the first request information to the network-side device through a message A, where the message A is messageA in the two-step random access procedure;
(4) sending the first request information to the network-side device through uplink SDT; and
(5) sending the first request information to the network-side device by using a first uplink resource.

Optionally, the first request information includes terminal identification information, and the terminal identification information includes at least one of the following:
(1) terminal identifier ID, for example, UE ID;
(2) cell radio network temporary identifier (C-RNTI);
(3) inactive-radio network temporary identifier (Inactive-Radio Network Temporary Identity, I-RNTI);
(4) resume identifier (resume ID), for example, UE ID;
(5) enhanced media access control (Media Access Control, MAC) entity information, for example, MAC-I information for verifying UE;
(6) sequence ID of the uplink positioning reference signal;
(7) specific RNTI;
(8) original serving cell ID; and
(9) cause (Cause) value, where the cause value indicates that the purpose of initiating a request by the UE is to request for or update a POS resource.

In some implementations, the method further includes:
receiving a cell list, RAN-based notification area (RAN-based Notification Area, RNA), tracking area code (Tracking Area Code, TAC), timing advance group (Timing Advance Group, TAG), or specific range that is configured by the network-side device, where part or all of the first configuration information and/or second configuration information for one of the cell list, RNA, TAC, TAG, or specific range are the same.

Further, the method further includes:
receiving fourth configuration information of the uplink positioning reference signal, where the fourth configuration information is configured per cell list, RNA, TAC, or TAG, and the fourth configuration information includes at least one of the following:
(1) a cell identity;
(2) TA timing configuration; and
(3) a first threshold, used for determining whether an allocated uplink positioning reference signal resource is available.

In some implementations, in a case that the first configuration information and/or the second configuration information is received from the network-side device through the specific POSSIB, the method further includes:
(1) initiating a RACH procedure;
(2) sending first identification information of the terminal to the network-side device, for example, a unique identifier of the UE; and
(3) receiving second identification information from the network-side device.

It can be understood that the foregoing procedure is actually a contention-based random access procedure. When the UE receives a configuration or resource sent through a POSSIB, a plurality of UEs may all receive the same configuration information and resource because the POSSIB is broadcast. In this case, the plurality of UEs send their own first identification information to a network side, such as unique identifiers of the UEs for contention. The network side determines UE that is to finally send an uplink positioning reference signal on this resource, and sends second identification information of the UE, such as UE-ID. Upon reception, if the UE detects that the second identification information sent by the network side is the same as or has a correspondence with the first identification information, the contention is successful. The UE that succeeds in the contention is allowed to send an uplink positioning reference signal over the uplink resource.

The sending first identification information of the terminal to the network-side device includes at least one of the following:
(1) sending the first identification information of the terminal to the network-side device by using a specific preamble;
(2) sending the first identification information of the terminal to the network-side device through a message 3;
(3) sending the first identification information of the terminal to the network-side device through a message A;
(4) sending the first identification information of the terminal to the network-side device through uplink SDT; and
(5) sending the first identification information of the terminal to the network-side device by using a first uplink resource.

The receiving second identification information from the network-side device includes at least one of the following:
(1) receiving the second identification information from the network-side device through a message 2;
(2) receiving the second identification information from the network-side device through a message 4;
(3) receiving the second identification information from the network-side device through a message B; and
(4) receiving the second identification information from the network-side device through downlink SDT.

Further, in a case that the second identification information is the same as or has a correspondence with the first identification information, the uplink positioning reference signal is sent to the network-side device by using a configuration in the specific POSSIB; otherwise, the UE does not expect to use a configuration in the POSSIB to send the uplink positioning reference signal to the network-side device.

In some implementations, the specific POSSIB carries support capability information of a first cell, and the support capability information includes at least one of the following:
(1) whether to support idle-state or inactive-state uplink positioning; and
(2) a resource dedicated to idle-state or inactive-state uplink positioning.

That is, in a case that the first cell supports idle-state or inactive-state uplink positioning, during capability exchange, the capability information may carry a resource dedicated to idle-state or inactive-state uplink positioning. When the capability information received by the terminal carries a resource dedicated to idle-state or inactive-state uplink positioning, the terminal may directly send an uplink positioning reference signal over the uplink positioning resource.

Further, in a case that the support capability information indicates not supporting idle-state or inactive-state uplink positioning, the method further includes: releasing a configuration resource corresponding to the first cell. At the same time, the first cell reports a change of its capability to the network side, or the first cell notifies other cells of the change of its capability. When the capability of the first cell received by other cells becomes not supporting idle-state or inactive-state uplink positioning, the configuration of the first cell is excluded (uplink positioning reference signals of the first cell are not configured) during configuration of uplink positioning reference signals in other cells.

In some implementations, the method further includes: determining a sending time of the uplink positioning reference signal based on the time domain information and first downlink time domain information.

The first downlink time domain information is determined in at least one of the following manners:
(1) determining the first downlink time domain information based on a time of an SSB in a camped-on cell, specifically, determining an SRS reference time based on an SFN initial time and a corresponding SFNO offset that are determined based on the time of the SSB in the camped-on cell;
(2) determining the first downlink time domain information based on a time of an SSB in an original cell, specifically, determining an SRS reference time based on a single frequency network SFN initial time and a corresponding SFN0 offset that are determined based on the time of the SSB in the original cell; and
(3) determining the first downlink time domain information based on a cell list and an SFN0 offset corresponding to each cell, specifically, determining an SRS reference time by selecting an SFN0 offset of a specific cell from the cell list and the SFN0 offset corresponding to each cell.

For example, if the camped-on cell changes, the original cell is the camped-on cell or the serving cell before the change. In this case, a time of a new camped-on cell is deduced based on the cell list, the SFN0 offset corresponding to each cell, and the SSB of the original cell, and then the sending time of the uplink positioning reference signal is determined based on a periodicity, a slot offset, and a start symbol.

In some implementations, the method further includes: the first configuration information and/or the second configuration information is at least one of the following:
the first configuration information and/or the second configuration information is configuration information of uplink positioning reference signals of one or more serving cells;
the first configuration information and/or the second configuration information is configuration information of an uplink positioning reference signal of a camped-on cell;
the first configuration information and/or the second configuration information is configuration information of uplink positioning reference signals of a plurality of specific cells;
the first configuration information and/or the second configuration information is configuration information of uplink positioning reference signals of all cells in a cell list;
the first configuration information and/or the second configuration information is configuration information of uplink positioning reference signals of all cells within an RNA range;
the first configuration information and/or the second configuration information is configuration information of uplink positioning reference signals of all cells within a TAC range;
the first configuration information and/or the second configuration information is configuration information of uplink positioning reference signals of all cells in a TAG; and
the first configuration information and/or the second configuration information is configuration information of uplink positioning reference signals of all cells within a specific range.

It should be noted that when the first configuration information and/or the second configuration information is configuration information of a plurality of cells, first configuration information and/or the second configuration information of each cell in a plurality of serving cells or a plurality of specific cells or a cell list or a RNA range or a TAC range or a TAG range or a specific range is configured separately. That is, first configuration information and/or second configuration information of cell A is independent of first configuration information and/or second configuration information of cell B.

In some implementations, the method further includes at least one of the following:
(1) skipping, by the terminal, expecting that a plurality of serving cells belong to different TAGs;
(2) skipping, by the terminal, expecting that a plurality of cells in a cell list belong to different TAGs; and
(3) skipping, by the terminal, expecting that a plurality of cells in a specific range belong to different TAGs.

Activation method for the uplink positioning reference signal:

The terminal receives activation related information that is of an uplink positioning reference signal and that is delivered by the network-side device, where the activation related information includes activation information and/or deactivation information.

It should be noted that when a time domain type of a configured uplink positioning reference signal is aperiodic or semi-persistent, it needs to be activated and/or deactivated through activation related information.

The activation information includes at least one of the following:
(1) first indication information used to indicate sending the uplink positioning reference signal; where after receiving the indication information, the UE determines an SRS sending time based on absolute time information or time domain offset information;
(2) absolute time information for sending the uplink positioning reference signal; and
(3) time domain offset information between a sending time of the uplink positioning reference signal and the first indication information, including a slot offset and/or start symbol.

The deactivation information includes at least one of the following:
(1) second indication information used to indicate stopping sending the uplink positioning reference signal;
(2) absolute time information for stopping sending the uplink positioning reference signal;
(3) time domain offset information between a transmission stop time of the uplink positioning reference signal and the first indication information; and
(4) time domain offset information between a transmission stop time of the uplink positioning reference signal and the second indication information.

In some implementations, before the receiving activation related information of an uplink positioning reference signal from the network-side device, the method further includes:
sending second request information to the network-side device, where the second request information is used to request the network-side device to send the activation related information.

The sending second request information to the network-side device includes at least one of the following:
(1) sending the second request information to the network-side device by using a specific preamble;
(2) sending the second request information to the network-side device through a message 3;
(3) sending the second request information to the network-side device through a message A;
(4) sending the second request information to the network-side device through uplink SDT; and
(5) sending the second request information to the network-side device by using a first uplink resource.

In some implementations, the receiving activation related information of an uplink positioning reference signal from the network-side device includes at least one of the following:
(1) receiving the activation related information from the network-side device through a radio resource control release message;
(2) receiving the activation related information from the network-side device through a radio resource control release with suspend message;
(3) receiving the activation related information from the network-side device through a paging message;
(4) receiving the activation related information from the network-side device through a message 2;
(5) receiving the activation related information from the network-side device through a message 4;
(6) receiving the activation related information from the network-side device through a message B; and
(7) receiving the activation related information from the network-side device through downlink SDT.

In some implementations, the first indication information is used to indicate sending part or all of the uplink positioning reference signal.

The second indication information is used to indicate stopping sending part or all of the uplink positioning reference signal.

The first indication information and the second indication information are indicated in at least one of the following manners:
(1) being indicated by using an identifier of the uplink positioning reference signal, where, for example, the identifier may be a trigger state (trigger state), a reporting state (reporting state), a resource set ID, or a resource ID; specifically, using the identifier being the trigger state as an example, if its value is 1, an uplink positioning reference signal whose corresponding trigger state is 1 is activated; and
(2) being indicated by using a bit string associated with the uplink positioning reference signal, where the bit string may be associated with a trigger state, a reporting state, a resource set, or a resource; specifically, using the bit string being corresponding to the trigger state as an example, a length is 2 bits, and when a value is 00, an uplink positioning reference signal whose trigger state is 0 is activated; and when the value is 01, an uplink positioning reference signal whose trigger state is 1 is activated.

In some implementations, the method further includes: determining the uplink positioning reference signal based on the activation related information, which includes at least one of the following:
(1) determining a to-be-sent uplink positioning reference signal;
(2) determining a sending time of the uplink positioning reference signal; and
(3) determining a time domain resource of the uplink positioning reference signal.

In some implementations, the first uplink resource includes at least one of the following:
(1) an uplink resource pre-configured by the network side;
(2) an uplink resource allocated through a radio resource control release message;
(3) an uplink resource allocated through a paging message;
(4) an uplink resource allocated through a message 2;
(5) an uplink resource allocated through a message 4;
(6) an uplink resource allocated through a message B; and
(7) an uplink resource allocated through downlink SDT.

In some implementations, the method further includes at least one of the following:
(1) receiving the radio resource control release message when the terminal enters an idle state or inactive state from a connected state; and
(2) receiving the radio resource control release after the terminal in the idle state or inactive state initiates a RACH procedure.

It should be noted that when the radio resource control release message is a radio resource control release message received when the terminal enters the idle state or inactive state from the connected state, no RRC signaling is exchanged, which is a configured grant (ConFIG. grant)-based scheme without exchange of RRC signaling; and when the radio resource control release message is a radio resource control release message received after the terminal in the idle state or inactive state initiates a RACH procedure, an RRC based scheme is included, with exchange of RRC signaling.

In some implementations, the method further includes:
in a case that a first specific event occurs, sending the second request information to the network-side device.

The first specific event includes at least one of the following:
(1) a first periodic event, including that the terminal does not enter a connected state upon expiration of a first periodic timer;
(2) first area event, including that the terminal does not enter the connected state upon detecting by the terminal that the terminal has entered, has left, or remains within a range of a first target area;
(3) a first motion event, including that the terminal does not enter the connected state upon detecting by the terminal that a location moving distance of the terminal is greater than or equal to a first preset linear distance;
(4) change of TA, including that the terminal does not enter the connected state in a case that a TA adjustment value of the terminal is greater than or equal to a first TA threshold;
(5) change of a first measurement value, including that the terminal does not enter the connected state in a case that a first measurement value of the terminal for N consecutive times is greater than or equal to a first measurement threshold, or the terminal does not enter the connected state in a case that a difference between two consecutive first measurement values of the terminal is greater than or equal to the first measurement threshold, where N is greater than or equal to 2, and the first measurement value includes at least one of the following: measurement information for an SSB such as reference signal received power RSRP or reference signal received quality RSRQ of the SSB, measurement information, such as RSRP or RSRQ, for a paging message, message 2, message 4, or message B, and measurement information, such as RSRP, RSRQ, reference signal time difference RSTD, or time of arrival TOA, for a positioning reference signal PRS;
(6) expiration of a first timer, including that the terminal does not enter the connected state in a case that the terminal detects expiration of the first timer;
(7) a first standard obtained from the network side being satisfied, where, for example, the network configures that the maximum number of times of idle/inactive-state positioning is N and the number of times of idle/inactive-state positioning before sending of a request at a current time is less than N; and the UE sends the second request information if the first standard is not satisfied, and each idle/inactive-state positioning is associated with one event report (event report) or the second request; and
(8) presence of an uplink positioning operation or an update configuration, for example, an upper layer of the UE triggers a (request message) for sending an uplink positioning signal.

Optionally, the second request may carry the event information, such as an event type. Optionally, the second request may also carry indication information of 'do not enter the connected state'.

In some implementations, the method further includes:
in a case that a second specific event occurs, sending the first request information to the network-side device or entering the connected state.

The second specific event includes at least one of the following:
(1) a second periodic event, including that the terminal does not enter a connected state upon expiration of a second periodic timer;
(2) a second area event, including that the terminal does not enter the connected state upon detecting by the terminal that the terminal has entered, has left, or remains within a range of a second target area;
(3) a second motion event, including that the terminal does not enter the connected state upon detecting by the terminal that a location moving distance of the terminal is greater than or equal to a second preset linear distance;
(4) change of TA, including that the terminal does not enter the connected state in a case that a TA adjustment value of the terminal is greater than or equal to a second TA threshold;
(5) change of a first measurement value, including that the terminal does not enter the connected state in a case that a first measurement value of the terminal for N consecutive times is greater than or equal to a second measurement threshold, or the terminal does not enter the connected state in a case that a difference between two consecutive first measurement values of the terminal is greater than or equal to the second measurement threshold, where N is greater than or equal to 2, and the first measurement value includes at least one of the following: measurement information, such as RSRP or RSRQ for an SSB, measurement information, such as RSRP or RSRQ, for a paging message, message 2, message 4, or message B, and measurement information, such as RSRP, RSRQ, RSTD, or TOA, for a positioning reference signal PRS;
(6) expiration of a second timer, including that the terminal does not enter the connected state in a case that the terminal detects expiration of the second timer;
(7) change of a camped-on cell, including that the terminal does not enter the connected state in a case that the terminal detects change of the camped-on cell;
(8) a second standard obtained from the network side being satisfied, where, for example, the network configures that the maximum number of times of idle/inactive-state positioning is N and the number of times of idle/inactive-state positioning before sending of a request at a current time is equal to N; and the UE sends the first request information or enters the connected state if the second standard is satisfied or not satisfied; and
(9) presence of an uplink positioning operation or an update configuration, for example, an upper layer of the UE triggers a (request message) for sending an uplink positioning signal.

Optionally, the first request may carry the event information, such as an event type. Optionally, the first request may also carry indication information of 'do not enter the connected state'.

In some implementations, the method further includes:
in a case that a third specific event occurs, releasing a configuration and/or resource of the uplink positioning reference signal.

The third specific event includes at least one of the following:
(1) a third periodic event, including that the terminal does not enter a connected state upon expiration of a third periodic timer;
(2) a third area event, including that the terminal does not enter the connected state upon detecting by the terminal that the terminal has entered, has left, or remains within a range of a third target area;
(3) a third motion event, including that the terminal does not enter the connected state upon detecting by the terminal that a location moving distance of the terminal is greater than or equal to a third preset linear distance;
(4) change of TA, including that the terminal does not enter the connected state in a case that a TA adjustment value of the terminal is greater than or equal to a third TA threshold;
(5) change of a first measurement value, including that the terminal does not enter the connected state in a case that all first measurement values of the terminal for N (N is greater than or equal to 2) consecutive times are less than a third measurement threshold, where the first measurement value includes at least one of the following: measurement information, such as RSRP or RSRQ for an SSB, measurement information, such as RSRP or RSRQ, for a paging message, message 2, message 4, or message B, and measurement information, such as RSRP, RSRQ, RSTD, or TOA, for a positioning reference signal PRS;
(6) expiration of a third timer, including that the terminal detects expiration of the third timer;
(7) change of a camped-on cell, including that the terminal detects change of the camped-on cell;
(8) a third standard obtained from the network side being satisfied, where, for example, the network configures that the maximum number of times of idle/inactive-state positioning is N and the number of times of idle/inactive-state positioning before sending of a request at a current time is equal to N; and the UE releases an SRS configuration and/or resource if the third standard is satisfied; and
(9) the network side indicating the terminal to release a configuration and/or resource of the uplink positioning reference signal.

Further, after the releasing a configuration and/or resource of the uplink positioning reference signal, the method further includes: sending a target indication to a higher layer through a physical layer or an RRC layer, where the target indication is used to indicate that the uplink positioning reference signal has been released or has become invalid. For example, the physical layer makes indication to the RRC layer, or the RRC layer makes indication to the non-access stratum (NAS), or the physical layer makes indication to the NAS.

Further, the method further includes: triggering an RRC connection establishment or RRC connection recovery procedure by the higher layer.

In some implementations, in a case that the first specific event and/or the second specific event occurs, the method further includes:
sending the uplink positioning reference signal to the network-side device according to a corresponding configuration of a corresponding new camped-on cell in a pre-configured fifth configuration information.

In this embodiment of this application, the first specific event and the second specific event may occur simultaneously, for example, when the second measurement threshold is greater than the first measurement threshold, a condition for the second specific event is satisfied and a condition for the first specific event is also satisfied.

The fifth configuration information may be one or more of the first configuration information, second configuration information, and third configuration information of a plurality of cells, or may be uplink positioning reference signal configuration information of a plurality of cells.

The fifth configuration information may include:
(1) beam-related configuration: transmission using an SSB corresponding to a new camped-on cell, or transmission using a beam determined based on a PRS corresponding to the new camped-on cell, where an association relationship may need to be established between the PRS and the camped-on cell, and the network may configure in advance a PRS to be measured in the inactive state and a corresponding cell, or the UE obtains, from broadcasting, PRSs to be measured for different camped-on cells, and determines a PRS for uplink transmission according to a predefined rule;
(2) TA-related configuration: transmission according to pre-configuration, protocol prescription, or latest TA, or a configured TA offset as broadcast in each cell; and
(3) power control related configuration: path loss calculation based on an SSB corresponding to the camped-on cell or path loss calculation based on a PRS corresponding to the camped-on cell.

In some implementations, the method further includes:
(1) determining sixth configuration information of the uplink positioning reference signal based on a second measurement value of a downlink reference signal; and
(2) sending the uplink positioning reference signal to the network-side device based on the sixth configuration information.

The second measurement value includes at least one of the following:
(1) reference signal received power (Reference Signal Receiving Power, RSRP) or reference signal received quality (Reference Signal Receiving Power, RSRQ) of an SSB, paging message, message 2, message 4, and message B;
(2) RSRP or RSRQ of a PRS;
(3) reference signal time difference RSTD of a PRS; and
(4) time of arrival TOA of a PRS.

In this embodiment of this application, according to the predefined rule, if the RSRP, RSRQ, RSTD, or TOA exceeds a specific threshold, or a change of RSRP, RSRQ, RSTD, or TOA exceeds a specific threshold, the uplink positioning reference signal is sent based on predefined configuration information. The predefined configuration information includes: predefined beam information; predefined TA information, and predefined power control information.

Being predefined may be being pre-configured, or may be selecting, according to a specific rule, related information of a corresponding downlink signal, including SSB, paging, Msg2, Msg4, MsgB, and PRS.

In some implementations, the method further includes:
in a case that sub-timers of the first timer, sub-timers of the second timer, or sub-timers of the third timer belong to different TAGs, determining the first timer, the second timer, or the third timer in at least one of the following manners:
(1) using a timer of a TAG of a camped-on cell as the first timer, the second timer, or the third timer;
(2) using a timer of a primary timing advance group (Primary TAG, PTAG) as the first timer, the second timer, or the third timer; and
(3) using a timer of a secondary timing advance group (Secondary TAG, STAG) as the first timer, the second timer, or the third timer.

In some implementations, in a case that the second specific event occurs, the method further includes at least one of the following:
(1) reporting a subcarrier spacing (Sub-Carrier Space, SCS) of the current uplink positioning reference signal;
(2) receiving timing advance information delivered by the network side;
(3) sending third request information to the network-side device, where the third request information is used to request the network side to deliver timing advance information; and
(4) sending third indication information to the network-side device, where the third indication information is used to indicate a type of a second specific event that occurs on the terminal.

In some implementations, the method further includes:
sending fourth indication information to the network-side device, where the fourth indication information is used to indicate whether a camped-on cell has changed and/or whether a configuration resource of an uplink positioning reference signal of an original serving cell, the camped-on cell, or any cell participating in positioning needs to be released.

In some implementations, the sending the third request information, the third indication information, and/or the fourth indication information includes at least one of the following:
(1) sending the third request information, the third indication information, and/or the fourth indication information to the network-side device by using a specific preamble;
(2) sending the third request information, the third indication information, and/or the fourth indication information to the network-side device through a message 3;
(3) sending the third request information, the third indication information, and/or the fourth indication information to the network-side device through a message A;
(4) sending the third request information, the third indication information, and/or the fourth indication information to the network-side device through uplink SDT; and
(5) sending the third request information, the third indication information, and/or the fourth indication information to the network-side device by using a first uplink resource.

### Collision rule for the uplink positioning reference signal:

In some implementations, the collision rule includes at least one of the following:
(1) in a case that a periodic uplink positioning reference signal collides with a preamble, discarding the periodic uplink positioning reference signal;
(2) in a case that the periodic uplink positioning reference signal collides with the preamble, discarding the preamble;
(3) in a case that the periodic uplink positioning reference signal collides with a message 3, discarding the periodic uplink positioning reference signal;
(4) in a case that the periodic uplink positioning reference signal collides with the message 3, discarding the message 3;
(5) in a case that the periodic uplink positioning reference signal collides with a message A physical random access channel PRACH, discarding the periodic uplink positioning reference signal;
(6) in a case that the periodic uplink positioning reference signal collides with the message A PRACH, discarding the message A PRACH;
(7) in a case that the periodic uplink positioning reference signal collides with a message A PUSCH, discarding the periodic uplink positioning reference signal;
(8) in a case that the periodic uplink positioning reference signal collides with the message A PUSCH, discarding the message A PUSCH;
(9) in a case that the periodic uplink positioning reference signal collides with a message A, discarding the periodic uplink positioning reference signal;
(10) in a case that the periodic uplink positioning reference signal collides with the message A, discarding the message A;
(11) in a case that the periodic uplink positioning reference signal collides with uplink SDT, discarding the periodic uplink positioning reference signal;
(12) in a case that the periodic uplink positioning reference signal collides with the uplink SDT, discarding the uplink SDT;
(13) in a case that an aperiodic uplink positioning reference signal collides with a preamble, discarding the aperiodic uplink positioning reference signal;
(14) in a case that the aperiodic uplink positioning reference signal collides with the preamble, discarding the preamble;
(15) in a case that the aperiodic uplink positioning reference signal collides with a message 3, discarding the aperiodic uplink positioning reference signal;
(16) in a case that the aperiodic uplink positioning reference signal collides with the message 3, discarding the message 3;
(17) in a case that the aperiodic uplink positioning reference signal collides with a message A PRACH, discarding the aperiodic uplink positioning reference signal;
(18) in a case that the aperiodic uplink positioning reference signal collides with the message A PRACH, discarding the message A PRACH;
(19) in a case that the aperiodic uplink positioning reference signal collides with a message A PUSCH, discarding the aperiodic uplink positioning reference signal;
(20) in a case that the aperiodic uplink positioning reference signal collides with the message A PUSCH, discarding the message A PUSCH;
(21) in a case that the aperiodic uplink positioning reference signal collides with a message A, discarding the aperiodic uplink positioning reference signal;
(22) in a case that the aperiodic uplink positioning reference signal collides with the message A, discarding the message A;
(23) in a case that the aperiodic uplink positioning reference signal collides with uplink SDT, discarding the aperiodic uplink positioning reference signal;
(24) in a case that the aperiodic uplink positioning reference signal collides with the uplink SDT, discarding the uplink SDT;
(25) in a case that a semi-persistent uplink positioning reference signal collides with a preamble, discarding the semi-persistent uplink positioning reference signal;
(26) in a case that the semi-persistent uplink positioning reference signal collides with the preamble, discarding the preamble;
(27) in a case that the semi-persistent uplink positioning reference signal collides with a message 3, discarding the semi-persistent uplink positioning reference signal;
(28) in a case that the semi-persistent uplink positioning reference signal collides with the message 3, discarding the message 3;
(29) in a case that the semi-persistent uplink positioning reference signal collides with a message A PRACH, discarding the semi-persistent uplink positioning reference signal;
(30) in a case that the semi-persistent uplink positioning reference signal collides with the message A PRACH, discarding the message A PRACH;
(31) in a case that the semi-persistent uplink positioning reference signal collides with a message A PUSCH, discarding the semi-persistent uplink positioning reference signal;
(32) in a case that the semi-persistent uplink positioning reference signal collides with the message A PUSCH, discarding the message A PUSCH;
(33) in a case that the semi-persistent uplink positioning reference signal collides with a message A, discarding the semi-persistent uplink positioning reference signal;
(34) in a case that the semi-persistent uplink positioning reference signal collides with the message A, discarding the message A;
(35) in a case that the semi-persistent uplink positioning reference signal collides with uplink SDT, discarding the semi-persistent uplink positioning reference signal;
(36) in a case that the semi-persistent uplink positioning reference signal collides with the uplink SDT, discarding the uplink SDT; and
(37) performing judgment based on priorities of an uplink positioning reference signal, a target signal, a target channel, or target data, and discarding a lower-priority target signal, target channel, or target data.

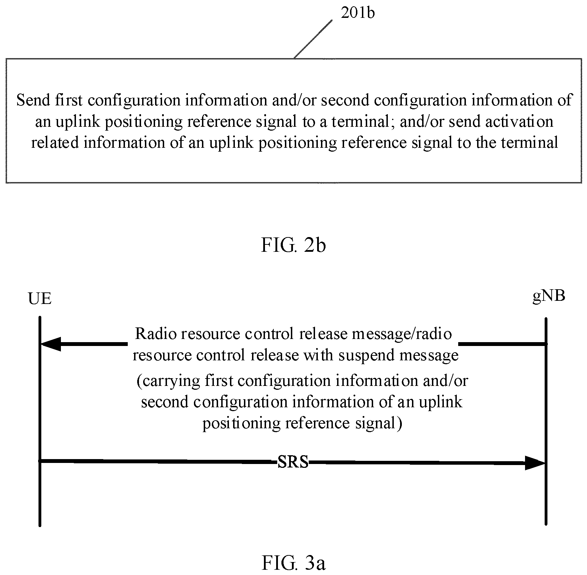

Referring to FIG. 2b, an embodiment of this application provides a non-connected-state positioning method. The method is executed by a network-side device, and the method includes the following steps.

Step 201b: Send first configuration information and/or second configuration information of an uplink positioning reference signal to a terminal; and/or send activation related information of an uplink positioning reference signal to the terminal.

The first configuration information and the second configuration information belong to different standard versions, or the first configuration information and the second configuration information are uplink positioning reference signal configuration information in different RRC connection states.

The activation related information includes activation information and/or deactivation information.

In this embodiment of the application, the first configuration information and/or the second configuration information includes at least one of the following:
(1) resource set identification information, for example, a resource set ID;
(2) resource identification information, for example, a resource ID;
(3) time domain type information, for example, periodic, aperiodic, and semi-persistent;
(4) the number of symbols;
(5) frequency domain interval information, for example, comb size;
(6) time domain information;
(7) frequency domain information;
(8) frequency hopping information;
(9) sequence information, for example, sequence ID;
(10) repetition factor information;
(11) first resource information, including resource information for 4-step CBRA or resource information for 4-step CFRA, where the first resource information is used to indicate a resource for sending request information by the UE, and the request information is used to request for a positioning configuration and/or positioning resource;
(12) second resource information, including resource information for 2-step CBRA or resource information for 2-step CFRA, where the second resource information is used to indicate a resource for sending request information by the UE, and the request information is used to request for a positioning configuration and/or positioning resource; and
(13) SDT resource information specific to the terminal.

The activation information includes at least one of the following:
(1) first indication information used to indicate sending the uplink positioning reference signal; where after receiving the indication information, the UE determines an SRS sending time based on absolute time information or time domain offset information;
(2) absolute time information for sending the uplink positioning reference signal; and
(3) time domain offset information between a sending time of the uplink positioning reference signal and the first indication information, including a slot offset and/or start symbol;

The deactivation information includes at least one of the following:
(1) second indication information used to indicate stopping sending the uplink positioning reference signal;
(2) absolute time information for stopping sending the uplink positioning reference signal;
(3) time domain offset information between a transmission stop time of the uplink positioning reference signal and the first indication information; and
(4) time domain offset information between a transmission stop time of the uplink positioning reference signal and the second indication information.

In some implementations, the method further includes: receiving from the terminal at least one of the following:
(1) first request information, used to request the network-side device to send the first configuration information and/or the second configuration information;
(2) second request information, used to request the network-side device to send the activation related information;
(3) third request information, used to request the network side to deliver timing advance information;
(4) third indication information, used to indicate a type of a second specific event that occurs on the terminal; and
(5) fourth indication information, used to indicate whether a camped-on cell has changed and/or whether a configuration resource of an uplink positioning reference signal of an original serving cell, the camped-on cell, or any cell participating in positioning needs to be released.

In some implementations, the method further includes:
(1) receiving first information from the terminal; and
(2) updating timing advance information based on the first information.

The first information includes at least one of the following:
(1) preamble;
(2) message 3;
(3) message A;
(4) uplink SDT; and
(5) uplink positioning reference signal.

In some implementations, the method further includes:
in a case that the network side updates the timing advance information, sending fifth indication information to a neighboring cell, where the fifth indication information is used to indicate the updated timing advance information.

In some implementations, the method further includes:
in a case that at least one of the first request information, the second request information, the third request information, the third indication information, and the fourth indication information is received from the terminal or the network side has updated the timing advance information, sending sixth indication information to the original serving cell, camped-on cell, or any cell participating in positioning, where the sixth indication information is used to indicate whether the configuration resource of the uplink positioning reference signal of the original serving cell, camped-on cell, or any cell participating in positioning needs to be released.

In some implementations, the method further includes:
during sending of the first configuration information and/or the second configuration information of the uplink positioning reference signal to the terminal, sending updated first configuration information and/or updated second configuration information to a neighboring cell.

The following describes the positioning method provided in the embodiments of this application with reference to specific implementations.

### Implementation 1: CG-based uplink positioning scheme for idle/inactive state

As shown in FIG. 3a, the following is included:
1) A base station sends a radio resource control release/radio resource control release with suspend message, carrying first configuration information and/or second configuration information of an uplink positioning reference signal, and UE enters an idle/inactive state.
2) Send an SRS based on the first configuration information and/or second configuration information.

### Implementation 2: RRC-based uplink positioning scheme for idle/inactive state

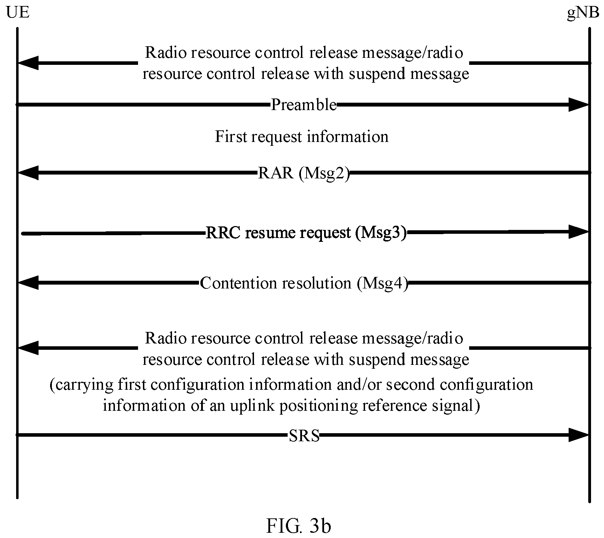

As shown in FIG. 3b, the following is included:
1) The base station sends a radio resource control release/radio resource control release with suspend message, and the UE enters the idle/inactive state.
2) The UE sends an RRC resume request message.
3) The base station sends a radio resource control release/radio resource control release with suspend message, carrying first configuration information and/or second configuration information of an uplink positioning reference signal.
4) Send an SRS based on the first configuration information and/or second configuration information.

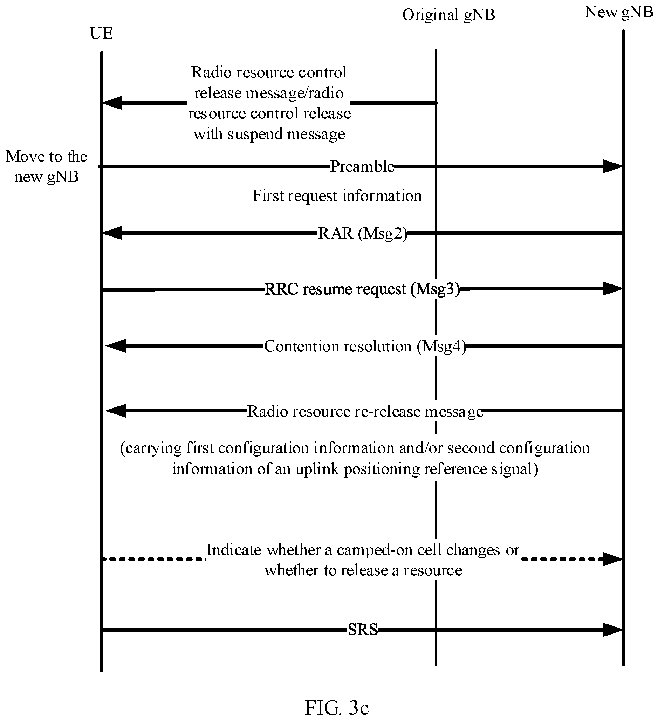

### Implementation 3: Uplink positioning scheme (updating an uplink positioning reference signal configuration) for a scenario in which a camped-on cell changes. As shown in FIG. 3c, the following is included:

1) The base station sends a radio resource control release/radio resource control release with suspend message, and the UE enters the idle/inactive state.
2) A cell on which the UE camps has changed.
3) The UE sends an RRC resume request message.
4) The base station sends a radio resource control release/radio resource control release with suspend message, to update first configuration information and/or the second configuration information of an uplink positioning reference signal.
5) Optionally, the UE indicates to the network side whether the camped-on cell has changed and/or whether a configuration resource of an uplink positioning reference signal of an original serving cell, the camped-on cell, or any cell participating in positioning needs to be released.
6) An SRS is sent based on the updated first configuration information and/or second configuration information.

### Implementation 4: Uplink positioning scheme (interaction with a neighboring cell) for a scenario in which a camped-on cell changes

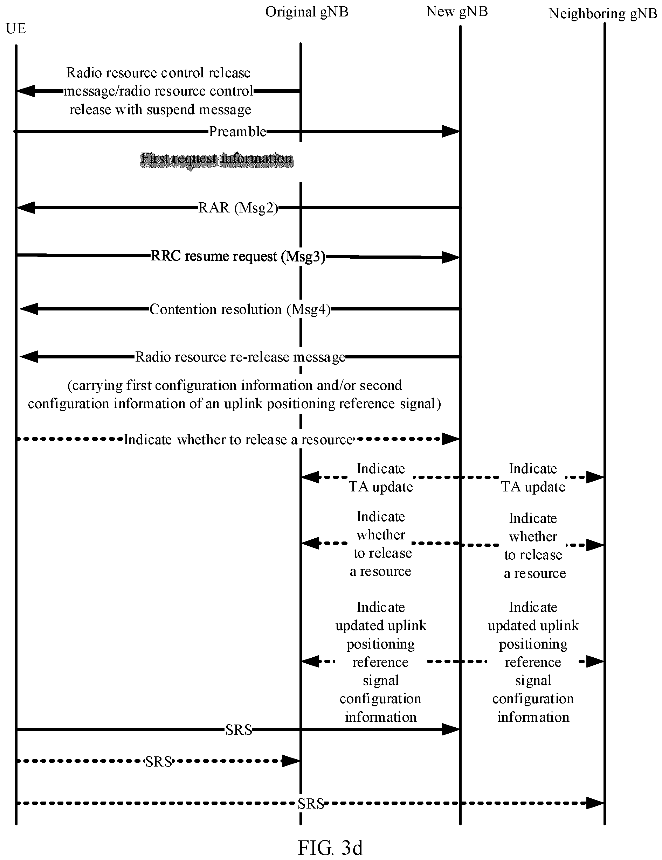

As shown in FIG. 3d, the following is included:
1) The base station sends a radio resource control release/radio resource control release with suspend message, and the UE enters the idle/inactive state.
2) A cell on which the UE camps has changed.
3) The UE sends an RRC resume request message.
4) The base station sends a radio resource control release/radio resource control release with suspend message, to update first configuration information and/or the second configuration information of an uplink positioning reference signal.
(5) Optionally, the UE indicates to the network side whether the camped-on cell has changed and/or whether a configuration resource of an uplink positioning reference signal of an original serving cell, the camped-on cell, or any cell participating in positioning needs to be released.
6) Optionally, the new camped-on cell indicates TA update to an original camped-on cell and/or a neighboring cell.
7) Optionally, the new camped-on cell indicates to the original camped-on cell and/or neighboring cell whether to release a resource.
8) Optionally, the new camped-on cell indicates updated uplink positioning reference signal configuration information to the original camped-on cell and/or neighboring cell.
9) An SRS is sent based on the updated first configuration information and/or second configuration information.

### Embodiment 5: Manner of associating the first configuration information and/or second configuration information of the uplink positioning reference signal with an SSB

The uplink positioning reference signal being an SRS is used as an example. The higher layer configures a parameter to make N SSBs associate with the SRS, where N is configured in the following two manners:
(1) If N ≥ 1, the N SSBs are mapped to one piece of uplink positioning reference signal configuration information.

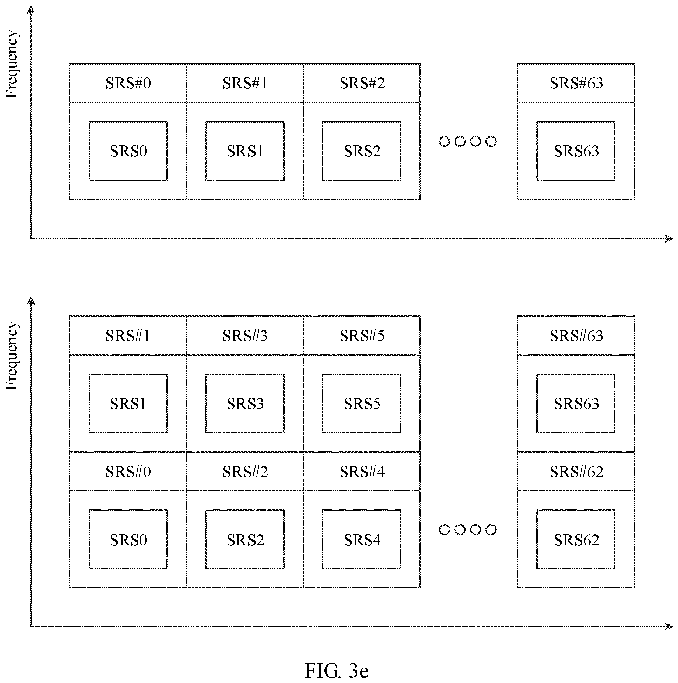

The two mapping manners for N=1 are shown in FIG. 3e.

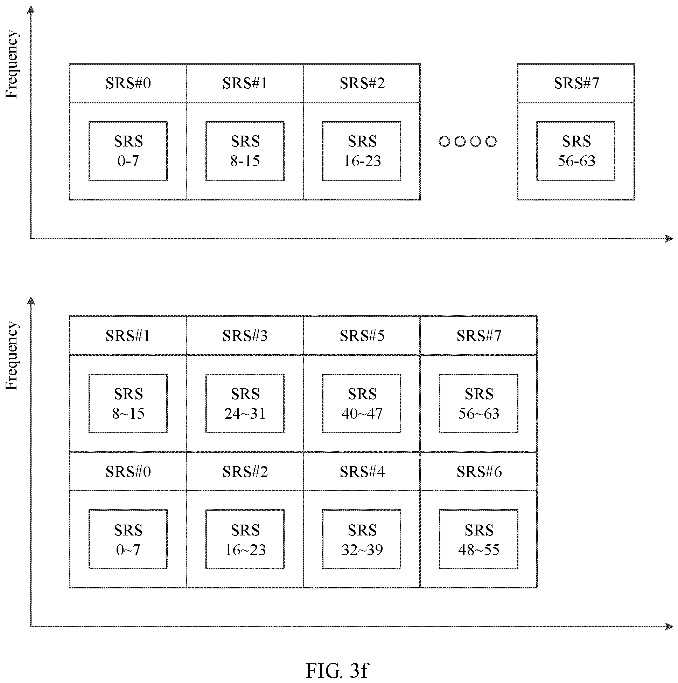

The two mapping manners for N=8 are shown in FIG. 3f.

(2) If N < 1, one SSB is mapped to 1/N consecutive pieces of valid uplink positioning reference signal configuration information.

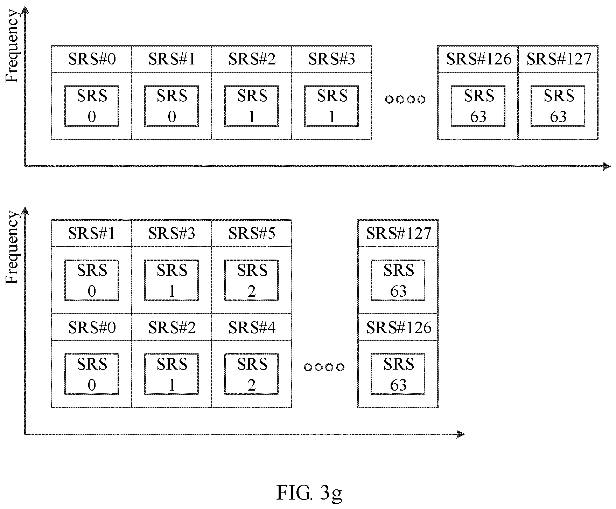

The two mapping manners for N=1/2 are shown in FIG. 3g.

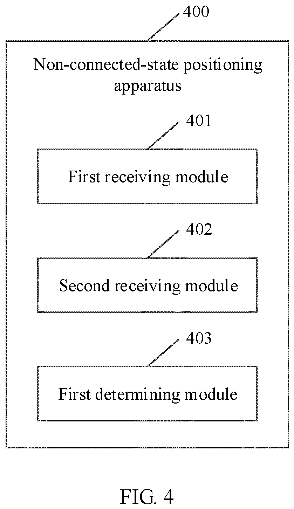

Referring to FIG. 4, an embodiment of this application provides a non-connected-state positioning apparatus 400. The apparatus 400 is applied to a terminal, and the apparatus 400 includes:
a first receiving module 401, configured to receive first configuration information and/or second configuration information of an uplink positioning reference signal from a network-side device;
a second receiving module 402, configured to receive activation related information of an uplink positioning reference signal from the network-side device, where the activation related information includes activation information and/or deactivation information; or
a first determining module 403, configured to determine a collision rule for an uplink positioning reference signal.

In some implementations, the first configuration information and the second configuration information belong to different standard versions, or the first configuration information and the second configuration information are uplink positioning reference signal configuration information in different RRC connection states.

In some implementations, the first configuration information and/or the second configuration information includes at least one of the following:
resource set identification information;
resource identification information;
time domain type information;
the number of symbols;
frequency domain interval information;
time domain information;
frequency domain information;
frequency hopping information;
sequence information;
repetition factor information;
first resource information, including resource information of four-step contention-based random access or resource information of four-step contention-free random access;
second resource information, including resource information of two-step contention-based random access or resource information of two-step contention-free random access; and
small data transmission SDT resource information specific to the terminal.

In some implementations, the first configuration information and/or the second configuration information is associated with a synchronization signal block SSB, including at least one of the following:
the resource set identification information is associated with an SSB index;
the resource identification information is associated with an SSB index; and
the sequence information is associated with an SSB index.

In some implementations, the first configuration information and/or the second configuration information is associated with a synchronization signal block SSB.

N SSBs are associated with one piece of the first configuration information and/or second configuration information, where if N<1, one SSB is mapped to 1/N consecutive pieces of valid first configuration information and/or second configuration information; if N>1, N SSBs are mapped to one piece of the first configuration information and/or second configuration information; or if N=1, the SSB is in a one-to-one correspondence to the first configuration information and/or the second configuration information.

In some implementations, the first receiving module is further configured to perform at least one of the following:
receiving the first configuration information and/or the second configuration information from the network-side device through a radio resource control release message;
receiving the first configuration information and/or the second configuration information from the network-side device through a radio resource control release with suspend message;
receiving the first configuration information and/or the second configuration information from the network-side device through a paging (paging) message;
receiving the first configuration information and/or the second configuration information from the network-side device through a message 2;
receiving the first configuration information and/or the second configuration information from the network-side device through a message 4;
receiving the first configuration information and/or the second configuration information from the network-side device through a message B;
receiving the first configuration information and/or the second configuration information from the network-side device through downlink SDT;
receiving the first configuration information and/or the second configuration information from the network-side device through a specific positioning information block POSSIB; and
in a case that the terminal is in a connected state, receiving the first configuration information and/or the second configuration information from the network-side device, and storing the first configuration information and/or the second configuration information into the terminal.

In some implementations, in a case that the first configuration information and/or the second configuration information is received from the network-side device through the specific positioning information block POSSIB, the specific POSSIB includes a random access channel RACH resource used for sending positioning request information by the terminal.

In some implementations, the apparatus further includes: a first processing module configured to:
in a case that third configuration information of uplink positioning reference signals is present on the terminal and the terminal enters an inactive state from a connected state, store the third configuration information of all the uplink positioning reference signals, and discard a radio resource other than that used for positioning.

In some implementations, the time domain information includes at least one of the following:
a periodicity of the uplink positioning reference signal;
a slot offset;
a start symbol;
a single-frequency network SFN initial time; and
a cell list and an SFNO offset corresponding to each cell.

The frequency domain information includes at least one of the following:
a bandwidth of the uplink positioning reference signal;
a frequency domain reference point;
a frequency domain position of a common resource block CRB0;
a frequency-domain offset;
bandwidth part BWP configuration; and
carrier configuration.

In some implementations, before the first configuration information and/or second configuration information of the uplink positioning reference signal is received from the network-side device, the first processing module is further configured to:
send first request information to the network-side device, where the first request information is used to request the network-side device to send the first configuration information and/or the second configuration information.

The sending first request information to the network-side device includes at least one of the following:
sending the first request information to the network-side device by using a specific preamble;
sending the first request information to the network-side device through a message 3;
sending the first request information to the network-side device through a message A;
sending the first request information to the network-side device through uplink SDT; and
sending the first request information to the network-side device by using a first uplink resource.

In some implementations, the first request information includes terminal identification information, and the terminal identification information includes at least one of the following:
terminal identifier ID;
cell radio network temporary identifier C-RNTI;
inactive-radio network temporary identifier I-RNTI;
resume ID (resume ID);
enhanced media access control entity MAC-I information;
sequence ID of the uplink positioning reference signal;
specific RNTI;
original serving cell ID; and
cause value.

In some implementations, the first processing module is further configured to:
receive a cell list, RAN-based notification area RNA, tracking area code TAC, timing advance group TAG, or specific range that is configured by the network-side device, where part or all of the first configuration information and/or second configuration information for one of the cell list, RNA, TAC, TAG, or specific range are the same.

In some implementations, the first processing module is further configured to:
receive fourth configuration information of the uplink positioning reference signal, where the fourth configuration information is configured per cell list, RNA, TAC, or TAG, and the fourth configuration information includes at least one of the following:
a cell identity;
TA timing configuration; and
a first threshold, used for determining whether an allocated uplink positioning reference signal resource is available.

In some implementations, in a case that the first configuration information and/or the second configuration information is received from the network-side device through the specific POSSIB, the first processing module is further configured to:
initiate a RACH procedure;
send first identification information of the terminal to the network-side device; and
receive second identification information from the network-side device.

The sending first identification information of the terminal to the network-side device includes at least one of the following:
sending the first identification information of the terminal to the network-side device by using a specific preamble;
sending the first identification information of the terminal to the network-side device through a message 3;
sending the first identification information of the terminal to the network-side device through a message A;
sending the first identification information of the terminal to the network-side device through uplink SDT; and
sending the first identification information of the terminal to the network-side device by using a first uplink resource.

The receiving second identification information from the network-side device includes at least one of the following:
receiving the second identification information from the network-side device through a message 2;
receiving the second identification information from the network-side device through a message 4;
receiving the second identification information from the network-side device through a message B; and
receiving the second identification information from the network-side device through downlink SDT.

In some implementations, the first processing module is further configured to:
in a case that the second identification information is the same as or has a correspondence with the first identification information, send the uplink positioning reference signal to the network-side device by using a configuration in the specific POSSIB.

In some implementations, the specific POSSIB carries support capability information of a first cell, and the support capability information includes at least one of the following:
whether to support idle-state or inactive-state uplink positioning; and
a resource dedicated to idle-state or inactive-state uplink positioning.

In some implementations, in a case that the support capability information indicates not supporting idle-state or inactive-state uplink positioning, the first processing module is further configured to:
release a configuration resource corresponding to the first cell.

In some implementations, the first processing module is further configured to:
determine a sending time of the uplink positioning reference signal based on the time domain information and first downlink time domain information.

The first processing module is further configured to:
determine the first downlink time domain information based on a time of an SSB in a camped-on cell;
determine the first downlink time domain information based on a time of an SSB in an original cell; and
determine the first downlink time domain information based on a cell list (list) and an SFNO offset corresponding to each cell.

In some implementations, the first configuration information and/or the second configuration information is at least one of the following:
the first configuration information and/or the second configuration information is configuration information of uplink positioning reference signals of one or more serving cells;
the first configuration information and/or the second configuration information is configuration information of an uplink positioning reference signal of a camped-on cell;
the first configuration information and/or the second configuration information is configuration information of uplink positioning reference signals of a plurality of specific cells;
the first configuration information and/or the second configuration information is configuration information of uplink positioning reference signals of all cells in a cell list;
the first configuration information and/or the second configuration information is configuration information of uplink positioning reference signals of all cells within a RAN-based notification area RNA range;
the first configuration information and/or the second configuration information is configuration information of uplink positioning reference signals of all cells within a tracking area code TAC range;
the first configuration information and/or the second configuration information is configuration information of uplink positioning reference signals of all cells in a timing advance group TAG; and
the first configuration information and/or the second configuration information is configuration information of uplink positioning reference signals of all cells within a specific range.

In some implementations, the first processing module is further configured to perform at least one of the following:
the terminal does not expect that a plurality of serving cells belong to different timing advance group TAGs;
the terminal does not expect that a plurality of serving cells in a cell list belong to different timing advance group TAGs; and
the terminal does not expect that a plurality of cells in a specific range belong to different timing advance group TAGs.

In some implementations, the activation information includes at least one of the following:
first indication information used to indicate sending the uplink positioning reference signal;
absolute time information for sending the uplink positioning reference signal; and
time domain offset information between a sending time of the uplink positioning reference signal and the first indication information.

The deactivation information includes at least one of the following:
second indication information used to indicate stopping sending the uplink positioning reference signal;
absolute time information for stopping sending the uplink positioning reference signal;
time domain offset information between a transmission stop time of the uplink positioning reference signal and the first indication information; and
time domain offset information between a transmission stop time of the uplink positioning reference signal and the second indication information.

In some implementations, before the activation related information of the uplink positioning reference signal is received from the network-side device, the first processing module is further configured to:
send second request information to the network-side device, where the second request information is used to request the network-side device to send the activation related information.

The sending second request information to the network-side device includes at least one of the following:
sending the second request information to the network-side device by using a specific preamble;
sending the second request information to the network-side device through a message 3;
sending the second request information to the network-side device through a message A;
sending the second request information to the network-side device through uplink SDT; and
sending the second request information to the network-side device by using a first uplink resource.

In some implementations, the second receiving module is further configured to perform at least one of the following:
receiving the activation related information from the network-side device through a radio resource control release message;
receiving the activation related information from the network-side device through a radio resource control release with suspend message;
receiving the activation related information from the network-side device through a paging message;
receiving the activation related information from the network-side device through a message 2;
receiving the activation related information from the network-side device through a message 4;
receiving the activation related information from the network-side device through a message B; and
receiving the activation related information from the network-side device through downlink SDT.

In some implementations, the first indication information is used to indicate sending part or all of the uplink positioning reference signal.

The second indication information is used to indicate stopping sending part or all of the uplink positioning reference signal.

The first indication information and the second indication information are indicated in at least one of the following manners:
being indicated by using an identifier of the uplink positioning reference signal; and
being indicated by using a bit string associated with the uplink positioning reference signal.

In some implementations, the first processing module is further configured to:
determine the uplink positioning reference signal based on the activation related information, which includes at least one of the following:
determining a to-be-sent uplink positioning reference signal;
determining a sending time of the uplink positioning reference signal; and
determining a time domain resource of the uplink positioning reference signal.

In some implementations, the first uplink resource includes at least one of the following:
an uplink resource pre-configured by a network side;
an uplink resource allocated through a radio resource control release message;
an uplink resource allocated through a paging message;
an uplink resource allocated through a message 2;
an uplink resource allocated through a message 4;
an uplink resource allocated through a message B; and
an uplink resource allocated through downlink SDT.

In some implementations, the first processing module is further configured to perform at least one of the following:
receiving the radio resource control release message when the terminal enters an idle state or inactive state from a connected state; and
receiving the radio resource control release after the terminal in the idle state or inactive state initiates a RACH procedure.

In some implementations, the first processing module is further configured to:
in a case that a first specific event occurs, send the second request information to the network-side device.

The first specific event includes at least one of the following:
a first periodic event, including that the terminal does not enter a connected state upon expiration of a first periodic timer;
a first area event, including that the terminal does not enter the connected state upon detecting by the terminal that the terminal has entered, has left, or remains within a range of a first target area;
a first motion event, including that the terminal does not enter the connected state upon detecting by the terminal that a location moving distance of the terminal is greater than or equal to a first preset linear distance;
change of TA, including that the terminal does not enter the connected state in a case that a TA adjustment value of the terminal is greater than or equal to a first TA threshold;
change of a first measurement value, including that the terminal does not enter the connected state in a case that a first measurement value of the terminal for N consecutive times is greater than or equal to a first measurement threshold, or the terminal does not enter the connected state in a case that a difference between two consecutive first measurement values of the terminal is greater than or equal to the first measurement threshold, where N is greater than or equal to 2, and the first measurement value includes at least one of the following: measurement information for an SSB, measurement information for a paging message, message 2, message 4, or message B, and measurement information for a positioning reference signal PRS;
expiration of a first timer, including that the terminal does not enter the connected state in a case that the terminal detects expiration of the first timer;
a first standard obtained from the network side being satisfied; and
presence of an uplink positioning operation or an update configuration.

In some implementations, the first processing module is further configured to:
in a case that a second specific event occurs, send the first request information to the network-side device or enter the connected state.

The second specific event includes at least one of the following:
a second periodic event, including that the terminal does not enter the connected state upon expiration of a second periodic timer;
a second area event, including that the terminal does not enter the connected state upon detecting by the terminal that the terminal has entered, has left, or remains within a range of a second target area;
a second motion event, including that the terminal does not enter the connected state upon detecting by the terminal that a location moving distance of the terminal is greater than or equal to a second preset linear distance;
change of TA, including that the terminal does not enter the connected state in a case that a TA adjustment value of the terminal is greater than or equal to a second TA threshold;
change of a first measurement value, including that the terminal does not enter the connected state in a case that the first measurement value of the terminal for N consecutive times is greater than or equal to a second measurement threshold, or the terminal does not enter the connected state in a case that a difference between two consecutive first measurement values of the terminal is greater than or equal to the second measurement threshold, where N is greater than or equal to 2, and the first measurement value includes at least one of the following: measurement information for an SSB, measurement information for a paging message, message 2, message 4, or message B, and measurement information for a positioning reference signal PRS;
expiration of a second timer, including that the terminal does not enter the connected state in a case that the terminal detects expiration of the second timer;
change of a camped-on cell, including that the terminal does not enter the connected state in a case that the terminal detects change of the camped-on cell;
a second standard obtained from the network side being satisfied; and
presence of an uplink positioning operation or an update configuration.

In some implementations, the first processing module is further configured to:
in a case that a third specific event occurs, release a configuration and/or resource of the uplink positioning reference signal.

The third specific event includes at least one of the following:
a third periodic event, including that the terminal does not enter the connected state upon expiration of a third periodic timer;
a third area event, including that the terminal does not enter the connected state upon detecting by the terminal that the terminal has entered, has left, or remains within a range of a third target area;
a third motion event, including that the terminal does not enter the connected state upon detecting by the terminal that a location moving distance of the terminal is greater than or equal to a third preset linear distance;
change of TA, including that the terminal does not enter the connected state in a case that a TA adjustment value of the terminal is greater than or equal to a third TA threshold;
change of a first measurement value, including that the terminal does not enter the connected state in a case that all first measurement values of the terminal for N (N is greater than or equal to 2) consecutive times are less than a third measurement threshold, where the first measurement value includes at least one of the following: measurement information for an SSB, measurement information for a paging message, message 2, message 4, or message B, and measurement information for a positioning reference signal PRS;
expiration of a third timer, including that the terminal detects expiration of the third timer;
change of a camped-on cell, including that the terminal detects change of the camped-on cell;
a third standard obtained from the network side being satisfied; and
the network side indicating the terminal to release a configuration and/or resource of the uplink positioning reference signal.

In some implementations, after the configuration and/or resource of the uplink positioning reference signal is released, the first processing module is further configured to:
send a target indication to a higher layer through a physical layer or an RRC layer, where the target indication is used to indicate that the uplink positioning reference signal has been released or has become invalid.

In some implementations, the first processing module is further configured to:
trigger an RRC connection establishment or RRC connection recovery procedure through the higher layer.

In some implementations, in a case that the first specific event and/or the second specific event occurs, the first processing module is further configured to:
send the uplink positioning reference signal to the network-side device according to a corresponding configuration of a corresponding new camped-on cell in a pre-configured fifth configuration information.

In some implementations, the first processing module is further configured to:
determine sixth configuration information of the uplink positioning reference signal based on a second measurement value of a downlink reference signal; and
send the uplink positioning reference signal to the network-side device based on the sixth configuration information.

The second measurement value includes at least one of the following:
reference signal received power RSRP of an SSB, paging message, message 2, message 4, and message B;
RSRP of a PRS; and
time difference of arrival TDOA of the PRS.

In some implementations, the first processing module is further configured to:
in a case that sub-timers of the first timer, sub-timers of the second timer, or sub-timers of the third timer belong to different TAGs, determine the first timer, the second timer, or the third timer in at least one of the following manners:
using a timer of a TAG of a camped-on cell as the first timer, the second timer, or the third timer;
using a timer of a primary timing advance group PTAG as the first timer, the second timer, or the third timer; and
using a timer of a secondary timing advance group STAG as the first timer, the second timer, or the third timer.

In some implementations, in a case that the second specific event occurs, the first processing module is further configured to:
report a subcarrier spacing SCS of the current uplink positioning reference signal;
receive timing advance information delivered by the network side;
send third request information to the network-side device, where the third request information is used to request the network side to deliver timing advance information; and
send third indication information to the network-side device, where the third indication information is used to indicate a type of a second specific event that occurs on the terminal.

In some implementations, the first processing module is further configured to:
send fourth indication information to the network-side device, where the fourth indication information is used to indicate whether a camped-on cell has changed and/or whether a configuration resource of an uplink positioning reference signal of an original serving cell, the camped-on cell, or any cell participating in positioning needs to be released.

In some implementations, the first processing module is further configured to perform at least one of the following:
sending the third request information, the third indication information, and/or the fourth indication information to the network-side device by using a specific preamble;
sending the third request information, the third indication information, and/or the fourth indication information to the network-side device through a message 3;
sending the third request information, the third indication information, and/or the fourth indication information to the network-side device through a message A;
sending the third request information, the third indication information, and/or the fourth indication information to the network-side device through uplink SDT; and
sending the third request information, the third indication information, and/or the fourth indication information to the network-side device by using a first uplink resource.

In some implementations, the collision rule includes at least one of the following:
in a case that a periodic uplink positioning reference signal collides with a preamble, discarding the periodic uplink positioning reference signal;
in a case that the periodic uplink positioning reference signal collides with the preamble, discarding the preamble;
in a case that the periodic uplink positioning reference signal collides with a message 3, discarding the periodic uplink positioning reference signal;
in a case that the periodic uplink positioning reference signal collides with the message 3, discarding the message 3;
in a case that the periodic uplink positioning reference signal collides with a message A physical random access channel PRACH, discarding the periodic uplink positioning reference signal;
in a case that the periodic uplink positioning reference signal collides with the message A PRACH, discarding the message A PRACH;
in a case that the periodic uplink positioning reference signal collides with a message A PUSCH, discarding the periodic uplink positioning reference signal;
in a case that the periodic uplink positioning reference signal collides with the message A PUSCH, discarding the message A PUSCH;
in a case that the periodic uplink positioning reference signal collides with a message A, discarding the periodic uplink positioning reference signal;
in a case that the periodic uplink positioning reference signal collides with the message A, discarding the message A;
in a case that the periodic uplink positioning reference signal collides with uplink SDT, discarding the periodic uplink positioning reference signal;
in a case that the periodic uplink positioning reference signal collides with the uplink SDT, discarding the uplink SDT;
in a case that an aperiodic uplink positioning reference signal collides with a preamble, discarding the aperiodic uplink positioning reference signal;
in a case that the aperiodic uplink positioning reference signal collides with the preamble, discarding the preamble;
in a case that the aperiodic uplink positioning reference signal collides with a message 3, discarding the aperiodic uplink positioning reference signal;
in a case that the aperiodic uplink positioning reference signal collides with the message 3, discarding the message 3;
in a case that the aperiodic uplink positioning reference signal collides with a message A PRACH, discarding the aperiodic uplink positioning reference signal;
in a case that the aperiodic uplink positioning reference signal collides with the message A PRACH, discarding the message A PRACH;
in a case that the aperiodic uplink positioning reference signal collides with a message A PUSCH, discarding the aperiodic uplink positioning reference signal;
in a case that the aperiodic uplink positioning reference signal collides with the message A PUSCH, discarding the message A PUSCH;
in a case that the aperiodic uplink positioning reference signal collides with a message A, discarding the aperiodic uplink positioning reference signal;
in a case that the aperiodic uplink positioning reference signal collides with the message A, discarding the message A;
in a case that the aperiodic uplink positioning reference signal collides with uplink SDT, discarding the aperiodic uplink positioning reference signal;
in a case that the aperiodic uplink positioning reference signal collides with the uplink SDT, discarding the uplink SDT;
in a case that a semi-persistent uplink positioning reference signal collides with a preamble, discarding the semi-persistent uplink positioning reference signal;
in a case that the semi-persistent uplink positioning reference signal collides with the preamble, discarding the preamble;
in a case that the semi-persistent uplink positioning reference signal collides with a message 3, discarding the semi-persistent uplink positioning reference signal;
in a case that the semi-persistent uplink positioning reference signal collides with the message 3, discarding the message 3;
in a case that the semi-persistent uplink positioning reference signal collides with a message A PRACH, discarding the semi-persistent uplink positioning reference signal;
in a case that the semi-persistent uplink positioning reference signal collides with the message A PRACH, discarding the message A PRACH;
in a case that the semi-persistent uplink positioning reference signal collides with a message A PUSCH, discarding the semi-persistent uplink positioning reference signal;
in a case that the semi-persistent uplink positioning reference signal collides with the message A PUSCH, discarding the message A PUSCH;
in a case that the semi-persistent uplink positioning reference signal collides with a message A, discarding the semi-persistent uplink positioning reference signal;
in a case that the semi-persistent uplink positioning reference signal collides with the message A, discarding the message A;
in a case that the semi-persistent uplink positioning reference signal collides with uplink SDT, discarding the semi-persistent uplink positioning reference signal;
in a case that the semi-persistent uplink positioning reference signal collides with the uplink SDT, discarding the uplink SDT; and
performing judgment based on priorities of an uplink positioning reference signal, a target signal, a target channel, or target data, and discarding a lower-priority target signal, target channel, or target data.

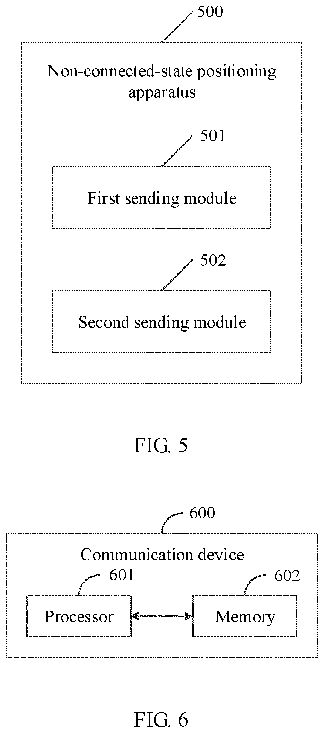

Referring to FIG. 5, an embodiment of this application provides a non-connected-state positioning apparatus 500. The apparatus 500 is applied to a network-side device, and the apparatus 500 includes:
a first sending module 501, configured to send first configuration information and/or second configuration information of an uplink positioning reference signal to a terminal; and
a second sending module 502, configured to send activation related information of an uplink positioning reference signal to a terminal, where the activation related information includes activation information and/or deactivation information.

In some implementations, the first configuration information and the second configuration information belong to different standard versions, or the first configuration information and the second configuration information are uplink positioning reference signal configuration information in different RRC connection states.

In some implementations, the first configuration information and/or the second configuration information includes at least one of the following:
resource set identification information;
resource identification information;
time domain type information;
the number of symbols;
frequency domain interval information;
time domain information;
frequency domain information;
frequency hopping information;
sequence information;
repetition factor information;
first resource information, including resource information of 4-step CBRA, resource information of 4-step CFRA, and/or resource information for indicating UE to request for a POS resource;
second resource information, including resource information of 2-step CBRA, resource information of 2-step CFRA, and/or resource information for indicating UE to request for a POS resource; and
SDT resource information specific to the terminal.

In some implementations, the activation information includes at least one of the following:
first indication information used to indicate sending the uplink positioning reference signal;
absolute time information for sending the uplink positioning reference signal; and
time domain offset information between a sending time of the uplink positioning reference signal and the first indication information.

The deactivation information includes at least one of the following:
second indication information used to indicate stopping sending the uplink positioning reference signal;
absolute time information for stopping sending the uplink positioning reference signal;
time domain offset information between a transmission stop time of the uplink positioning reference signal and the first indication information; and
time domain offset information between a transmission stop time of the uplink positioning reference signal and the second indication information.

In some implementations, the apparatus further includes: a second processing module configured to:
receive at least one of the following from the terminal:
first request information, used to request the network-side device to send the first configuration information and/or the second configuration information;
second request information, used to request the network-side device to send the activation related information;
third request information, used to request the network side to deliver timing advance information;
third indication information, used to indicate a type of a second specific event that occurs on the terminal; and
fourth indication information, used to indicate whether a camped-on cell has changed and/or whether a configuration resource of an uplink positioning reference signal of an original serving cell, the camped-on cell, or any cell participating in positioning needs to be released.

In some implementations, the second processing module is further configured to:
receive first information from the terminal; and
update timing advance information based on the first information.

The first information includes at least one of the following:
preamble
message 3;
message A;
uplink SDT; and
uplink positioning reference signal.

In some implementations, the second processing module is further configured to:
in a case that the network side updates the timing advance information, send fifth indication information to a neighboring cell, where the fifth indication information is used to indicate the updated timing advance information.

In some implementations, the second processing module is further configured to:
in a case that at least one of the first request information, the second request information, the third request information, the third indication information, and the fourth indication information is received from the terminal or the network side has updated the timing advance information, send sixth indication information to the original serving cell, camped-on cell, or any cell participating in positioning, where the sixth indication information is used to indicate whether the configuration resource of the uplink positioning reference signal of the original serving cell, camped-on cell, or any cell participating in positioning needs to be released.

In some implementations, the second processing module is further configured to:
during sending of the first configuration information and/or the second configuration information of the uplink positioning reference signal to the terminal, send updated first configuration information and/or updated second configuration information to a neighboring cell.

Optionally, as shown in FIG. 6, an embodiment of this application further provides a communication device 600, including a processor 601, a memory 602, and a program or instructions stored in the memory 602 and capable of running on the processor 601. For example, when the communication device 600 is a terminal and when the program or the instructions are executed by the processor 601, the processes of the foregoing embodiments of the non-connected-state positioning method are implemented, with the same technical effects achieved. When the communication device 600 is a network-side device and when the program or the instructions are executed by the processor 601, the processes of the foregoing embodiments of the non-connected-state positioning method are implemented, with the same technical effects achieved. To avoid repetition, details are not described herein again.

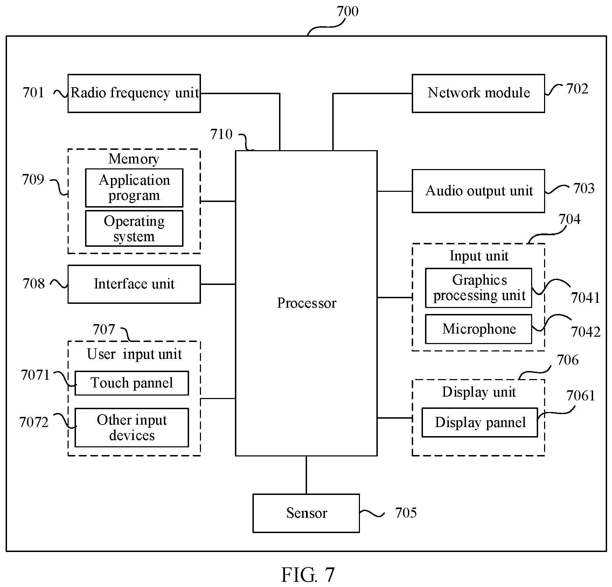

FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than those shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing; and also sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound playback function or an image playback function), and the like. In addition, the memory 709 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to receive first configuration information and/or second configuration information of an uplink positioning reference signal from a network-side device;
and/or, the processor 710 is configured to receive activation related information of the uplink positioning reference signal from the network-side device, where the activation related information includes activation information and/or deactivation information;
and/or, the processor 710 is configured to determine a collision rule for an uplink positioning reference signal.

In some implementations, the first configuration information and the second configuration information belong to different standard versions, or the first configuration information and the second configuration information are uplink positioning reference signal configuration information in different RRC connection states.

In some implementations, the first configuration information and/or the second configuration information includes at least one of the following:
resource set identification information;
resource identification information;
time domain type information;
the number of symbols;
frequency domain interval information;
time domain information;
frequency domain information;
frequency hopping information;
sequence information;
repetition factor information;
first resource information, including resource information of four-step contention-based random access 4-step CBRA or resource information of four-step contention-free random access 4-step CFRA;
second resource information, including resource information of two-step contention-based random access 2-step CBRA or resource information of two-step contention-free random access 2-step CFRA; and
small data transmission SDT resource information specific to the terminal.

In some implementations, the first configuration information and/or the second configuration information is associated with a synchronization signal block SSB, including at least one of the following:
the resource set identification information is associated with an SSB index;
the resource identification information is associated with an SSB index; and
the sequence information is associated with an SSB index.

In some implementations, the first configuration information and/or the second configuration information is associated with a synchronization signal block SSB, where
N SSBs are associated with one piece of the first configuration information and/or second configuration information, where if N<1, one SSB is mapped to 1/N consecutive pieces of valid first configuration information and/or second configuration information; if N>1, N SSBs are mapped to one piece of the first configuration information and/or second configuration information; or if N=1, the SSB is in a one-to-one correspondence to the first configuration information and/or the second configuration information.

In some implementations, the receiving the first configuration information and/or second configuration information of the uplink positioning reference signal from the network-side device includes at least one of the following:
receiving the first configuration information and/or the second configuration information from the network-side device through a radio resource control release message;
receiving the first configuration information and/or the second configuration information from the network-side device through a radio resource control release with suspend message;
receiving the first configuration information and/or the second configuration information from the network-side device through a paging (paging) message;
receiving the first configuration information and/or the second configuration information from the network-side device through a message 2;
receiving the first configuration information and/or the second configuration information from the network-side device through a message 4;
receiving the first configuration information and/or the second configuration information from the network-side device through a message B;
receiving the first configuration information and/or the second configuration information from the network-side device through downlink SDT;
receiving the first configuration information and/or the second configuration information from the network-side device through a specific positioning information block POSSIB; and
in a case that the terminal is in a connected state, receiving the first configuration information and/or the second configuration information from the network-side device, and storing the first configuration information and/or the second configuration information into the terminal.

In some implementations, in a case that the first configuration information and/or the second configuration information is received from the network-side device through the specific positioning information block POSSIB, the specific POSSIB includes a random access channel RACH resource used for sending positioning request information by the terminal.

In some implementations, the processor 710 is further configured to:
in a case that third configuration information of uplink positioning reference signals is present on the terminal and the terminal enters an inactive state from a connected state, store the third configuration information of all the uplink positioning reference signals, and discard a radio resource other than that used for positioning.

In some implementations, the time domain information includes at least one of the following:
a periodicity of the uplink positioning reference signal;
a slot offset;
a start symbol;
a single-frequency network SFN initial time; and
a cell list and an SFNO offset corresponding to each cell.

The frequency domain information includes at least one of the following:
a bandwidth of the uplink positioning reference signal;
a frequency domain reference point;
a frequency domain position of a common resource block CRB0;
a frequency-domain offset;
bandwidth part BWP configuration; and
carrier configuration.

In some implementations, before the first configuration information and/or second configuration information of the uplink positioning reference signal is received from the network-side device, the processor 710 is further configured to:
send first request information to the network-side device, where the first request information is used to request the network-side device to send the first configuration information and/or the second configuration information.

The sending first request information to the network-side device includes at least one of the following:
sending the first request information to the network-side device by using a specific preamble;
sending the first request information to the network-side device through a message 3;
sending the first request information to the network-side device through a message A;
sending the first request information to the network-side device through uplink SDT; and
sending the first request information to the network-side device by using a first uplink resource.

In some implementations, the first request information includes terminal identification information, and the terminal identification information includes at least one of the following:
terminal identifier ID;
cell radio network temporary identifier C-RNTI;
inactive-radio network temporary identifier I-RNTI;
resume ID (resume ID);
enhanced media access control entity MAC-I information;
sequence ID of the uplink positioning reference signal;
specific RNTI;
original serving cell ID; and
cause value.

In some implementations, the processor 710 is further configured to:
receive a cell list, RAN-based notification area RNA, tracking area code TAC, timing advance group TAG, or specific range that is configured by the network-side device, where part or all of the first configuration information and/or second configuration information for one of the cell list, RNA, TAC, TAG, or specific range are the same.

In some implementations, the processor 710 is further configured to:
receive fourth configuration information of the uplink positioning reference signal, where the fourth configuration information is configured per cell list, RNA, TAC, or TAG, and the fourth configuration information includes at least one of the following:
a cell identity;
TA timing configuration; and
a first threshold, used for determining whether an allocated uplink positioning reference signal resource is available.

In some implementations, in a case that the first configuration information and/or the second configuration information is received from the network-side device through the specific POSSIB, the processor 710 is further configured to:
initiate a RACH procedure;
send first identification information of the terminal to the network-side device; and
receive second identification information from the network-side device.

The sending first identification information of the terminal to the network-side device includes at least one of the following:
sending the first identification information of the terminal to the network-side device by using a specific preamble;
sending the first identification information of the terminal to the network-side device through a message 3;
sending the first identification information of the terminal to the network-side device through a message A;
sending the first identification information of the terminal to the network-side device through uplink SDT; and
sending the first identification information of the terminal to the network-side device by using a first uplink resource.

The receiving second identification information from the network-side device includes at least one of the following:
receiving the second identification information from the network-side device through a message 2;
receiving the second identification information from the network-side device through a message 4;
receiving the second identification information from the network-side device through a message B; and
receiving the second identification information from the network-side device through downlink SDT.

In some implementations, the processor 710 is further configured to:
in a case that the second identification information is the same as or has a correspondence with the first identification information, send the uplink positioning reference signal to the network-side device by using a configuration in the specific POSSIB.

In some implementations, the specific POSSIB carries support capability information of a first cell, and the support capability information includes at least one of the following:
whether to support idle-state or inactive-state uplink positioning; and
a resource dedicated to idle-state or inactive-state uplink positioning.

In some implementations, in a case that the support capability information indicates not supporting idle-state or inactive-state uplink positioning, the processor 710 is further configured to:
release a configuration resource corresponding to the first cell.

In some implementations, the processor 710 is further configured to:
determine a sending time of the uplink positioning reference signal based on the time domain information and first downlink time domain information.

The first downlink time domain information is determined in at least one of the following manners:
determining the first downlink time domain information based on a time of an SSB in a camped-on cell;
determining the first downlink time domain information based on a time of an SSB in an original cell; and
determining the first downlink time domain information based on a cell list and an SFNO offset corresponding to each cell.

In some implementations, the first configuration information and/or the second configuration information is at least one of the following:
the first configuration information and/or the second configuration information is configuration information of uplink positioning reference signals of one or more serving cells;
the first configuration information and/or the second configuration information is configuration information of an uplink positioning reference signal of a camped-on cell;
the first configuration information and/or the second configuration information is configuration information of an uplink positioning reference signal of a specific cell;
the first configuration information and/or the second configuration information is configuration information of uplink positioning reference signals of all cells in a cell list;
the first configuration information and/or the second configuration information is configuration information of uplink positioning reference signals of all cells within a RAN-based notification area RNA range;
the first configuration information and/or the second configuration information is configuration information of uplink positioning reference signals of all cells within a tracking area code TAC range;
the first configuration information and/or the second configuration information is configuration information of uplink positioning reference signals of all cells in a timing advance group TAG; and
the first configuration information and/or the second configuration information is configuration information of uplink positioning reference signals of all cells within a specific range.

In some implementations, the processor 710 is further configured to perform at least one of the following:
the terminal does not expect that a plurality of serving cells belong to different timing advance group TAGs;
the terminal does not expect that a plurality of serving cells in a cell list belong to different timing advance group TAGs; and
the terminal does not expect that a plurality of cells in a specific range belong to different timing advance group TAGs.

In some implementations, the activation information includes at least one of the following:
first indication information used to indicate sending the uplink positioning reference signal;
absolute time information for sending the uplink positioning reference signal; and
time domain offset information between a sending time of the uplink positioning reference signal and the first indication information.

The deactivation information includes at least one of the following:
second indication information used to indicate stopping sending the uplink positioning reference signal;
absolute time information for stopping sending the uplink positioning reference signal;
time domain offset information between a transmission stop time of the uplink positioning reference signal and the first indication information; and
time domain offset information between a transmission stop time of the uplink positioning reference signal and the second indication information.

In some implementations, before the activation related information of the uplink positioning reference signal is received from the network-side device, the processor 710 is further configured to:
send second request information to the network-side device, where the second request information is used to request the network-side device to send the activation related information.

The sending second request information to the network-side device includes at least one of the following:
sending the second request information to the network-side device by using a specific preamble;
sending the second request information to the network-side device through a message 3;
sending the second request information to the network-side device through a message A;
sending the second request information to the network-side device through uplink SDT; and
sending the second request information to the network-side device by using a first uplink resource.

In some implementations, the processor 710 is further configured to perform at least one of the following:
receiving the activation related information from the network-side device through a radio resource control release message;
receiving the activation related information from the network-side device through a radio resource control release with suspend message;
receiving the activation related information from the network-side device through a paging message;
receiving the activation related information from the network-side device through a message 2;
receiving the activation related information from the network-side device through a message 4;
receiving the activation related information from the network-side device through a message B; and
receiving the activation related information from the network-side device through downlink SDT.

In some implementations, the first indication information is used to indicate sending part or all of the uplink positioning reference signal.

The second indication information is used to indicate stopping sending part or all of the uplink positioning reference signal.

The first indication information and the second indication information are indicated in at least one of the following manners:
being indicated by using an identifier of the uplink positioning reference signal; and
being indicated by using a bit string associated with the uplink positioning reference signal.

In some implementations, the processor 710 is further configured to:
determine the uplink positioning reference signal based on the activation related information, which includes at least one of the following:
determining a to-be-sent uplink positioning reference signal;
determining a sending time of the uplink positioning reference signal; and
determining a time domain resource of the uplink positioning reference signal.

In some implementations, the first uplink resource includes at least one of the following:
an uplink resource pre-configured by a network side;
an uplink resource allocated through a radio resource control release message;
an uplink resource allocated through a paging message;
an uplink resource allocated through a message 2;
an uplink resource allocated through a message 4;
an uplink resource allocated through a message B; and
an uplink resource allocated through downlink SDT.

In some implementations, the processor 710 is further configured to perform at least one of the following:
receiving the radio resource control release message when the terminal enters an idle state or inactive state from a connected state; and
receiving the radio resource control release after the terminal in the idle state or inactive state initiates a RACH procedure.

In some implementations, the processor 710 is further configured to:
in a case that a first specific event occurs, send the second request information to the network-side device.

The first specific event includes at least one of the following:
a first periodic event, including that the terminal does not enter a connected state upon expiration of a first periodic timer;
a first area event, including that the terminal does not enter the connected state upon detecting by the terminal that the terminal has entered, has left, or remains within a range of a first target area;
a first motion event, including that the terminal does not enter the connected state upon detecting by the terminal that a location moving distance of the terminal is greater than or equal to a first preset linear distance;
change of TA, including that the terminal does not enter the connected state in a case that a TA adjustment value of the terminal is greater than or equal to a first TA threshold;
change of a first measurement value, including that the terminal does not enter the connected state in a case that a first measurement value of the terminal for N consecutive times is greater than or equal to a first measurement threshold, or the terminal does not enter the connected state in a case that a difference between two consecutive first measurement values of the terminal is greater than or equal to the first measurement threshold, where N is greater than or equal to 2, and the first measurement value includes at least one of the following: measurement information for an SSB, measurement information for a paging message, message 2, message 4, or message B, and measurement information for a positioning reference signal PRS;
expiration of a first timer, including that the terminal does not enter the connected state in a case that the terminal detects expiration of the first timer;
a first standard obtained from the network side being satisfied; and
presence of an uplink positioning operation or an update configuration.

In some implementations, the processor 710 is further configured to:
in a case that a second specific event occurs, send the first request information to the network-side device or enter the connected state.

The second specific event includes at least one of the following:
a second periodic event, including that the terminal does not enter the connected state upon expiration of a second periodic timer;
a second area event, including that the terminal does not enter the connected state upon detecting by the terminal that the terminal has entered, has left, or remains within a range of a second target area;
a second motion event, including that the terminal does not enter the connected state upon detecting by the terminal that a location moving distance of the terminal is greater than or equal to a second preset linear distance;
change of TA, including that the terminal does not enter the connected state in a case that a TA adjustment value of the terminal is greater than or equal to a second TA threshold;
change of a first measurement value, including that the terminal does not enter the connected state in a case that the first measurement value of the terminal for N consecutive times is greater than or equal to a second measurement threshold, or the terminal does not enter the connected state in a case that a difference between two consecutive first measurement values of the terminal is greater than or equal to the second measurement threshold, where N is greater than or equal to 2, and the first measurement value includes at least one of the following: measurement information for an SSB, measurement information for a paging message, message 2, message 4, or message B, and measurement information for a positioning reference signal PRS;
expiration of a second timer, including that the terminal does not enter the connected state in a case that the terminal detects expiration of the second timer;
change of a camped-on cell, including that the terminal does not enter the connected state in a case that the terminal detects change of the camped-on cell;
a second standard obtained from the network side being satisfied; and
presence of an uplink positioning operation or an update configuration.

In some implementations, the processor 710 is further configured to:
in a case that a third specific event occurs, release a configuration and/or resource of the uplink positioning reference signal.

The third specific event includes at least one of the following:
a third periodic event, including that the terminal does not enter the connected state upon expiration of a third periodic timer;
a third area event, including that the terminal does not enter the connected state upon detecting by the terminal that the terminal has entered, has left, or remains within a range of a third target area;
a third motion event, including that the terminal does not enter the connected state upon detecting by the terminal that a location moving distance of the terminal is greater than or equal to a third preset linear distance;
change of TA, including that the terminal does not enter the connected state in a case that a TA adjustment value of the terminal is greater than or equal to a third TA threshold;
change of a first measurement value, including that the terminal does not enter the connected state in a case that all first measurement values of the terminal for N (N is greater than or equal to 2) consecutive times are less than a third measurement threshold, where the first measurement value includes at least one of the following: measurement information for an SSB, measurement information for a paging message, message 2, message 4, or message B, and measurement information for a positioning reference signal PRS;
expiration of a third timer, including that the terminal detects expiration of the third timer;
change of a camped-on cell, including that the terminal detects change of the camped-on cell;
a third standard obtained from the network side being satisfied; and
the network side indicating the terminal to release a configuration and/or resource of the uplink positioning reference signal.

In some implementations, after the configuration and/or resource of the uplink positioning reference signal is released, the processor 710 is further configured to:
send a target indication to a higher layer through a physical layer or an RRC layer, where the target indication is used to indicate that the uplink positioning reference signal has been released or has become invalid.

In some implementations, the processor 710 is further configured to:
trigger an RRC connection establishment or RRC connection recovery procedure through the higher layer.

In some implementations, in a case that the first specific event and/or the second specific event occurs, the processor 710 is further configured to:
send the uplink positioning reference signal to the network-side device according to a corresponding configuration of a corresponding new camped-on cell in a pre-configured fifth configuration information.

In some implementations, the processor 710 is further configured to:
determine sixth configuration information of the uplink positioning reference signal based on a second measurement value of a downlink reference signal; and
send the uplink positioning reference signal to the network-side device based on the sixth configuration information.

The second measurement value includes at least one of the following:
reference signal received power RSRP of an SSB, paging message, message 2, message 4, and message B;
RSRP of a PRS; and
time difference of arrival TDOA of the PRS.

In some implementations, the processor 710 is further configured to:
in a case that sub-timers of the first timer, sub-timers of the second timer, or sub-timers of the third timer belong to different TAGs, determine the first timer, the second timer, or the third timer in at least one of the following manners:
using a timer of a TAG of a camped-on cell as the first timer, the second timer, or the third timer;
using a timer of a primary timing advance group PTAG as the first timer, the second timer, or the third timer; and
using a timer of a secondary timing advance group STAG as the first timer, the second timer, or the third timer.

In some implementations, in a case that the second specific event occurs, the processor 710 is further configured to perform at least one of the following:
reporting a subcarrier spacing SCS of the current uplink positioning reference signal;
receiving timing advance information delivered by the network side;
sending third request information to the network-side device, where the third request information is used to request the network side to deliver timing advance information; and
sending third indication information to the network-side device, where the third indication information is used to indicate a type of a second specific event that occurs on the terminal.

In some implementations, the processor 710 is further configured to:
send fourth indication information to the network-side device, where the fourth indication information is used to indicate whether a camped-on cell has changed and/or whether a configuration resource of an uplink positioning reference signal of an original serving cell, the camped-on cell, or any cell participating in positioning needs to be released.

In some implementations, the processor 710 is further configured to:
send the third request information, the third indication information, and/or the fourth indication information to the network-side device in at least one of the following manners:
sending the third request information, the third indication information, and/or the fourth indication information to the network-side device by using a specific preamble;
sending the third request information, the third indication information, and/or the fourth indication information to the network-side device through a message 3;
sending the third request information, the third indication information, and/or the fourth indication information to the network-side device through a message A;
sending the third request information, the third indication information, and/or the fourth indication information to the network-side device through uplink SDT; and
sending the third request information, the third indication information, and/or the fourth indication information to the network-side device by using a first uplink resource.

In some implementations, the collision rule includes at least one of the following:
in a case that a periodic uplink positioning reference signal collides with a preamble, discarding the periodic uplink positioning reference signal;
in a case that the periodic uplink positioning reference signal collides with the preamble, discarding the preamble;
in a case that the periodic uplink positioning reference signal collides with a message 3, discarding the periodic uplink positioning reference signal;
in a case that the periodic uplink positioning reference signal collides with the message 3, discarding the message 3;
in a case that the periodic uplink positioning reference signal collides with a message A physical random access channel PRACH, discarding the periodic uplink positioning reference signal;
in a case that the periodic uplink positioning reference signal collides with the message A PRACH, discarding the message A PRACH;
in a case that the periodic uplink positioning reference signal collides with a message A PUSCH, discarding the periodic uplink positioning reference signal;
in a case that the periodic uplink positioning reference signal collides with the message A PUSCH, discarding the message A PUSCH;
in a case that the periodic uplink positioning reference signal collides with a message A, discarding the periodic uplink positioning reference signal;
in a case that the periodic uplink positioning reference signal collides with the message A, discarding the message A;
in a case that the periodic uplink positioning reference signal collides with uplink SDT, discarding the periodic uplink positioning reference signal;
in a case that the periodic uplink positioning reference signal collides with the uplink SDT, discarding the uplink SDT;
in a case that an aperiodic uplink positioning reference signal collides with a preamble, discarding the aperiodic uplink positioning reference signal;
in a case that the aperiodic uplink positioning reference signal collides with the preamble, discarding the preamble;
in a case that the aperiodic uplink positioning reference signal collides with a message 3, discarding the aperiodic uplink positioning reference signal;
in a case that the aperiodic uplink positioning reference signal collides with the message 3, discarding the message 3;
in a case that the aperiodic uplink positioning reference signal collides with a message A PRACH, discarding the aperiodic uplink positioning reference signal;
in a case that the aperiodic uplink positioning reference signal collides with the message A PRACH, discarding the message A PRACH;
in a case that the aperiodic uplink positioning reference signal collides with a message A PUSCH, discarding the aperiodic uplink positioning reference signal;
in a case that the aperiodic uplink positioning reference signal collides with the message A PUSCH, discarding the message A PUSCH;
in a case that the aperiodic uplink positioning reference signal collides with a message A, discarding the aperiodic uplink positioning reference signal;
in a case that the aperiodic uplink positioning reference signal collides with the message A, discarding the message A;
in a case that the aperiodic uplink positioning reference signal collides with uplink SDT, discarding the aperiodic uplink positioning reference signal;
in a case that the aperiodic uplink positioning reference signal collides with the uplink SDT, discarding the uplink SDT;
in a case that a semi-persistent uplink positioning reference signal collides with a preamble, discarding the semi-persistent uplink positioning reference signal;
in a case that the semi-persistent uplink positioning reference signal collides with the preamble, discarding the preamble;
in a case that the semi-persistent uplink positioning reference signal collides with a message 3, discarding the semi-persistent uplink positioning reference signal;
in a case that the semi-persistent uplink positioning reference signal collides with the message 3, discarding the message 3;
in a case that the semi-persistent uplink positioning reference signal collides with a message A PRACH, discarding the semi-persistent uplink positioning reference signal;
in a case that the semi-persistent uplink positioning reference signal collides with the message A PRACH, discarding the message A PRACH;
in a case that the semi-persistent uplink positioning reference signal collides with a message A PUSCH, discarding the semi-persistent uplink positioning reference signal;
in a case that the semi-persistent uplink positioning reference signal collides with the message A PUSCH, discarding the message A PUSCH;
in a case that the semi-persistent uplink positioning reference signal collides with a message A, discarding the semi-persistent uplink positioning reference signal;
in a case that the semi-persistent uplink positioning reference signal collides with the message A, discarding the message A;
in a case that the semi-persistent uplink positioning reference signal collides with uplink SDT, discarding the semi-persistent uplink positioning reference signal;
in a case that the semi-persistent uplink positioning reference signal collides with the uplink SDT, discarding the uplink SDT; and
performing judgment based on priorities of an uplink positioning reference signal, a target signal, a target channel, or target data, and discarding a lower-priority target signal, target channel, or target data.

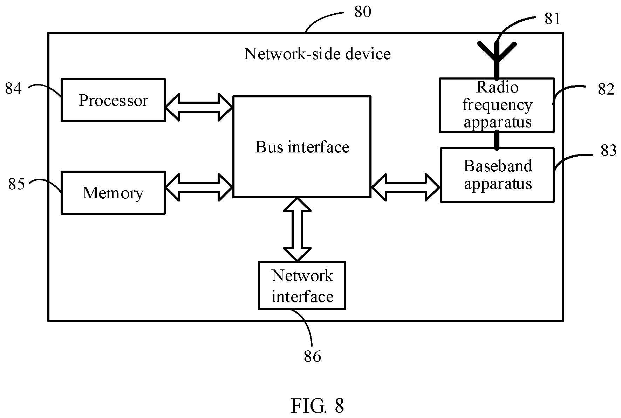

Specifically, an embodiment of this application further provides a network-side device. As shown in FIG. 8, the network-side device 80 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The frequency band processing apparatus may be located in the baseband apparatus 83. The method performed by the network-side device in the foregoing embodiments may be implemented in the baseband apparatus 83, and the baseband apparatus 83 includes a processor 84 and a memory 85.

The baseband apparatus 83 may include, for example, at least one baseband board, where a plurality of chips are disposed on the baseband board. As shown in FIG. 8, one of the chips, for example, the processor 84, is connected to the memory 85, to invoke a program in the memory 85 to perform the operation of the network device shown in the foregoing method embodiments.

The baseband apparatus 83 may further include a network interface 86, configured to exchange information with the radio frequency apparatus 82, where the interface is, for example, a common public radio interface (common public radio interface, CPRI).

Specifically, the network-side device in this embodiment of this application further includes: instructions or a program stored in the memory 85 and capable of running on the processor 84. The processor 84 invokes the instructions or program in the memory 85 to execute the method executed by the modules shown in FIG. 5, with the same technical effects achieved. To avoid repetition, details are not repeated herein.

An embodiment of this application further provides a readable storage medium. The readable storage medium may be non-volatile or volatile. A program or instructions are stored in the readable storage medium. When the program or the instructions are executed by a processor, the processes of the foregoing embodiments of the non-connected-state positioning method shown can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions of a network-side device to implement the processes of the foregoing embodiments of the non-connected-state positioning method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory readable storage medium, and when being executed by at least one processor, the computer program product is configured to implement the processes of the foregoing embodiments of the non-connected-state positioning method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A non-connected-state positioning method, wherein the method is executed by a terminal, and the method comprises:
receiving first configuration information and/or second configuration information of an uplink positioning reference signal from a network-side device;
and/or
receiving activation related information of an uplink positioning reference signal from the network-side device, wherein the activation related information comprises activation information and/or deactivation information;
and/or
determining a collision rule for an uplink positioning reference signal.

2. The method according to claim 1, wherein the first configuration information and the second configuration information belong to different standard versions, or the first configuration information and the second configuration information are uplink positioning reference signal configuration information in different RRC connection states.

3. The method according to claim 1, wherein the first configuration information and/or the second configuration information comprises at least one of the following:
resource set identification information;
resource identification information;
time domain type information;
the number of symbols;
frequency domain interval information;
time domain information;
frequency domain information;
frequency hopping information;
sequence information;
repetition factor information;
first resource information, comprising resource information of four-step contention-based random access 4-step CBRA or resource information of four-step contention-free random access 4-step CFRA;
second resource information, comprising resource information of two-step contention-based random access 2-step CBRA or resource information of two-step contention-free random access 2-step CFRA; and
small data transmission SDT resource information specific to the terminal.

4. The method according to claim 3, wherein the first configuration information and/or the second configuration information is associated with a synchronization signal block SSB, comprising at least one of the following:
the resource set identification information is associated with an SSB index;
the resource identification information is associated with an SSB index; and
the sequence information is associated with an SSB index.

5. The method according to claim 4, wherein the first configuration information and/or the second configuration information is associated with a synchronization signal block SSB; wherein
N SSBs are associated with one piece of the first configuration information and/or second configuration information, wherein if N<1, one SSB is mapped to 1/N consecutive pieces of valid first configuration information and/or second configuration information; if N>1, N SSBs are mapped to one piece of the first configuration information and/or second configuration information; or if N=1, the SSB is in a one-to-one correspondence to the first configuration information and/or the second configuration information.

6. The method according to claim 1, wherein the receiving first configuration information and/or second configuration information of an uplink positioning reference signal from a network-side device comprises at least one of the following:
receiving the first configuration information and/or the second configuration information from the network-side device through a radio resource control release RRC release message;
receiving the first configuration information and/or the second configuration information from the network-side device through a radio resource control release with suspend (RRC release with suspend) message;
receiving the first configuration information and/or the second configuration information from the network-side device through a paging (paging) message;
receiving the first configuration information and/or the second configuration information from the network-side device through a message 2;
receiving the first configuration information and/or the second configuration information from the network-side device through a message 4;
receiving the first configuration information and/or the second configuration information from the network-side device through a message B;
receiving the first configuration information and/or the second configuration information from the network-side device through downlink SDT;
receiving the first configuration information and/or the second configuration information from the network-side device through a specific positioning information block POSSIB; and
in a case that the terminal is in a connected state, receiving the first configuration information and/or the second configuration information from the network-side device, and storing the first configuration information and/or the second configuration information into the terminal.

7. The method according to claim 6, wherein in a case that the first configuration information and/or the second configuration information is received from the network-side device through the specific positioning information block POSSIB, the specific POSSIB comprises a random access channel RACH resource used for sending positioning request information by the terminal.

8. The method according to claim 6, wherein the method further comprises:
in a case that third configuration information of uplink positioning reference signals is present on the terminal and the terminal enters an inactive state from a connected state, storing the third configuration information of all the uplink positioning reference signals, and discarding a radio resource other than that used for positioning.

9. The method according to claim 3, wherein the time domain information comprises at least one of the following:
a periodicity of the uplink positioning reference signal;
a slot offset;
a start symbol;
a single-frequency network SFN initial time; and
a cell list (list) and an SFNO offset corresponding to each cell; and
the frequency domain information comprises at least one of the following:
a bandwidth of the uplink positioning reference signal;
a frequency domain reference point;
a frequency domain position of a common resource block CRB0;
a frequency-domain offset;
bandwidth part BWP configuration; and
carrier configuration.

10. The method according to claim 1, wherein before the receiving first configuration information and/or second configuration information of an uplink positioning reference signal from a network-side device, the method further comprises:
sending first request information to the network-side device, wherein the first request information is used to request the network-side device to send the first configuration information and/or the second configuration information; and
the sending first request information to the network-side device comprises at least one of the following:
sending the first request information to the network-side device by using a specific preamble;
sending the first request information to the network-side device through a message 3;
sending the first request information to the network-side device through a message A;
sending the first request information to the network-side device through uplink SDT; and
sending the first request information to the network-side device by using a first uplink resource.

11. The method according to claim 10, wherein the first request information comprises terminal identification information, and the terminal identification information comprises at least one of the following:
terminal identifier ID;
cell radio network temporary identifier C-RNTI;
inactive-radio network temporary identifier I-RNTI;
resume ID (resume ID);
enhanced media access control entity MAC-I information;
sequence ID of the uplink positioning reference signal;
specific RNTI;
original serving cell ID; and
cause (Cause) value.

12. The method according to claim 1, wherein the method further comprises:
receiving a cell list, RAN-based notification area RNA, tracking area code TAC, timing advance group TAG, or specific range that is configured by the network-side device, wherein part or all of the first configuration information and/or second configuration information for one of the cell list, RNA, TAC, TAG, or specific range are the same.

13. The method according to claim 12, wherein the method further comprises:
receiving fourth configuration information of the uplink positioning reference signal, wherein the fourth configuration information is configured per cell list, RNA, TAC, or TAG, and the fourth configuration information comprises at least one of the following:
a cell identity;
TA timing configuration; and
a first threshold, used for determining whether an allocated uplink positioning reference signal resource is available.

14. The method according to claim 6, wherein in a case that the first configuration information and/or the second configuration information is received from the network-side device through the specific POSSIB, the method further comprises:
initiating a RACH procedure;
sending first identification information of the terminal to the network-side device; and
receiving second identification information from the network-side device; wherein
the sending first identification information of the terminal to the network-side device comprises at least one of the following:
sending the first identification information of the terminal to the network-side device by using a specific preamble;
sending the first identification information of the terminal to the network-side device through a message 3;
sending the first identification information of the terminal to the network-side device through a message A;
sending the first identification information of the terminal to the network-side device through uplink SDT; and
sending the first identification information of the terminal to the network-side device by using a first uplink resource; and
the receiving second identification information from the network-side device comprises at least one of the following:
receiving the second identification information from the network-side device through a message 2;
receiving the second identification information from the network-side device through a message 4;
receiving the second identification information from the network-side device through a message B; and
receiving the second identification information from the network-side device through downlink SDT.

15. The method according to claim 14, wherein the method further comprises:
in a case that the second identification information is the same as or has a correspondence with the first identification information, sending the uplink positioning reference signal to the network-side device by using a configuration in the specific POSSIB.

16. The method according to claim 6, wherein the specific POSSIB carries support capability information of a first cell, and the support capability information comprises at least one of the following:
whether to support idle-state or inactive-state uplink positioning; and
a resource dedicated to idle-state or inactive-state uplink positioning.

17. The method according to claim 16, wherein in a case that the support capability information indicates not supporting idle-state or inactive-state uplink positioning, the method further comprises:
releasing a configuration resource corresponding to the first cell.

18. The method according to claim 9, wherein the method further comprises:
determining a sending time of the uplink positioning reference signal based on the time domain information and first downlink time domain information; wherein
the first downlink time domain information is determined in at least one of the following manners:
determining the first downlink time domain information based on a time of an SSB in a camped-on cell;
determining the first downlink time domain information based on a time of an SSB in an original cell; and
determining the first downlink time domain information based on a cell list (list) and an SFN0 offset corresponding to each cell.

19. The method according to claim 1, wherein a method for configuring the first configuration information and/or the second configuration information comprises at least one of the following:
the first configuration information and/or the second configuration information is configuration information of uplink positioning reference signals of one or more serving cells;
the first configuration information and/or the second configuration information is configuration information of an uplink positioning reference signal of a camped-on cell;
the first configuration information and/or the second configuration information is configuration information of an uplink positioning reference signal of a specific cell;
the first configuration information and/or the second configuration information is configuration information of uplink positioning reference signals of all cells in a cell list;
the first configuration information and/or the second configuration information is configuration information of uplink positioning reference signals of all cells within an RNA range;
the first configuration information and/or the second configuration information is configuration information of uplink positioning reference signals of all cells within a TAC range;
the first configuration information and/or the second configuration information is configuration information of uplink positioning reference signals of all cells in a TAG; and
the first configuration information and/or the second configuration information is configuration information of uplink positioning reference signals of all cells within a specific range.

20. The method according to claim 19, wherein the method further comprises at least one of the following:
the terminal does not expect that a plurality of serving cells belong to different TAGs;
the terminal does not expect that a plurality of cells in a cell list belong to different TAGs; and
the terminal does not expect that a plurality of cells in a specific range belong to different TAGs.

21. The method according to claim 1, wherein the activation information comprises at least one of the following:
first indication information used to indicate sending the uplink positioning reference signal;
absolute time information for sending the uplink positioning reference signal; and
time domain offset information between a sending time of the uplink positioning reference signal and the first indication information; and
the deactivation information comprises at least one of the following:
second indication information used to indicate stopping sending the uplink positioning reference signal;
absolute time information for stopping sending the uplink positioning reference signal;
time domain offset information between a transmission stop time of the uplink positioning reference signal and the first indication information; and
time domain offset information between a transmission stop time of the uplink positioning reference signal and the second indication information.

22. The method according to claim 10, wherein before the receiving activation related information of an uplink positioning reference signal from the network-side device, the method further comprises:
sending second request information to the network-side device, wherein the second request information is used to request the network-side device to send the activation related information; and
the sending second request information to the network-side device comprises at least one of the following:
sending the second request information to the network-side device by using a specific preamble;
sending the second request information to the network-side device through a message 3;
sending the second request information to the network-side device through a message A;
sending the second request information to the network-side device through uplink SDT; and
sending the second request information to the network-side device by using a first uplink resource.

23. The method according to claim 1, wherein the receiving activation related information of an uplink positioning reference signal from the network-side device comprises at least one of the following:
receiving the activation related information from the network-side device through an RRC release message;
receiving the activation related information from the network-side device through an RRC release with suspend message;
receiving the activation related information from the network-side device through a paging message;
receiving the activation related information from the network-side device through a message 2;
receiving the activation related information from the network-side device through a message 4;
receiving the activation related information from the network-side device bthrough a message B; and
receiving the activation related information from the network-side device through downlink SDT.

24. The method according to claim 21, wherein the first indication information is used to indicate sending part or all of the uplink positioning reference signal; and
the second indication information is used to indicate stopping sending part or all of the uplink positioning reference signal; wherein
the first indication information and the second indication information are indicated in at least one of the following manners:
being indicated by using an identifier of the uplink positioning reference signal; and
being indicated by using a bit string associated with the uplink positioning reference signal.

25. The method according to claim 1, wherein the method further comprises:
determining the uplink positioning reference signal based on the activation related information, which comprises at least one of the following:
determining a to-be-sent uplink positioning reference signal;
determining a sending time of the uplink positioning reference signal; and
determining a time domain resource of the uplink positioning reference signal.

26. The method according to claim 10, 14, or 22, wherein the first uplink resource comprises at least one of the following:
an uplink resource pre-configured by a network side;
an uplink resource allocated through an RRC release message;
an uplink resource allocated through a paging message;
an uplink resource allocated through a message 2;
an uplink resource allocated through a message 4;
an uplink resource allocated through a message B; and
an uplink resource allocated through downlink SDT.

27. The method according to claim 6 or 23, wherein the method further comprises at least one of the following:
receiving the RRC release message when the terminal enters an idle state or inactive state from a connected state; and
receiving the RRC release message after the terminal in the idle state or inactive state initiates a RACH procedure.

28. The method according to claim 22, wherein the method further comprises:
in a case that a first specific event occurs, sending the second request information to the network-side device; wherein
the first specific event comprises at least one of the following:
a first periodic event, comprising that the terminal does not enter a connected state upon expiration of a first periodic timer;
a first area event, comprising that the terminal does not enter the connected state upon detecting by the terminal that the terminal has entered, has left, or remains within a range of a first target area;
a first motion event, comprising that the terminal does not enter the connected state upon detecting by the terminal that a location moving distance of the terminal is greater than or equal to a first preset linear distance;
change of timing advance (Timing advance, TA), comprising that the terminal does not enter the connected state in a case that a TA adjustment value of the terminal is greater than or equal to a first TA threshold;
change of a first measurement value, comprising that the terminal does not enter the connected state in a case that a first measurement value of the terminal for N consecutive times is greater than or equal to a first measurement threshold, or the terminal does not enter the connected state in a case that a difference between two consecutive first measurement values of the terminal is greater than or equal to the first measurement threshold, wherein N is greater than or equal to 2, and the first measurement value comprises at least one of the following: measurement information for an SSB, measurement information for a paging message, message 2, message 4, or message B, and measurement information for a positioning reference signal PRS;
expiration of a first timer, comprising that the terminal does not enter the connected state in a case that the terminal detects expiration of the first timer;
a first standard obtained from the network side being satisfied; and
presence of an uplink positioning operation or an update configuration.

29. The method according to claim 28, wherein the method further comprises:
in a case that a second specific event occurs, sending the first request information to the network-side device or entering the connected state; wherein
the second specific event comprises at least one of the following:
a second periodic event, comprising that the terminal does not enter the connected state upon expiration of a second periodic timer;
a second area event, comprising that the terminal does not enter the connected state upon detecting by the terminal that the terminal has entered, has left, or remains within a range of a second target area;
a second motion event, comprising that the terminal does not enter the connected state upon detecting by the terminal that a location moving distance of the terminal is greater than or equal to a second preset linear distance;
change of TA, comprising that the terminal does not enter the connected state in a case that a TA adjustment value of the terminal is greater than or equal to a second TA threshold;
change of a first measurement value, comprising that the terminal does not enter the connected state in a case that the first measurement value of the terminal for N consecutive times is greater than or equal to a second measurement threshold, or the terminal does not enter the connected state in a case that a difference between two consecutive first measurement values of the terminal is greater than or equal to the second measurement threshold, wherein N is greater than or equal to 2, and the first measurement value comprises at least one of the following: measurement information for an SSB, measurement information for a paging message, message 2, message 4, or message B, and measurement information for a positioning reference signal PRS;
expiration of a second timer, comprising that the terminal does not enter the connected state in a case that the terminal detects expiration of the second timer;
change of a camped-on cell, comprising that the terminal does not enter the connected state in a case that the terminal detects change of the camped-on cell;
a second standard obtained from the network side being satisfied; and
presence of an uplink positioning operation or an update configuration.

30. The method according to claim 29, wherein the method further comprises:
in a case that a third specific event occurs, releasing a configuration and/or resource of the uplink positioning reference signal; wherein
the third specific event comprises at least one of the following:
a third periodic event, comprising that the terminal does not enter the connected state upon expiration of a third periodic timer;
a third area event, comprising that the terminal does not enter the connected state upon detecting by the terminal that the terminal has entered, has left, or remains within a range of a third target area;
a third motion event, comprising that the terminal does not enter the connected state upon detecting by the terminal that a location moving distance of the terminal is greater than or equal to a third preset linear distance;
change of TA, comprising that the terminal does not enter the connected state in a case that a TA adjustment value of the terminal is greater than or equal to a third TA threshold;
change of a first measurement value, comprising that the terminal does not enter the connected state in a case that all first measurement values of the terminal for N (N is greater than or equal to 2) consecutive times are less than a third measurement threshold, wherein the first measurement value comprises at least one of the following: measurement information for an SSB, measurement information for a paging message, message 2, message 4, or message B, and measurement information for a positioning reference signal PRS;
expiration of a third timer, comprising that the terminal detects expiration of the third timer;
change of a camped-on cell, comprising that the terminal detects change of the camped-on cell;
a third standard obtained from the network side being satisfied; and
the network side indicating the terminal to release a configuration and/or resource of the uplink positioning reference signal.

31. The method according to claim 30, wherein after the releasing a configuration and/or resource of the uplink positioning reference signal, the method further comprises:
sending a target indication to a higher layer through a physical layer or an RRC layer, wherein the target indication is used to indicate that the uplink positioning reference signal has been released or has become invalid.

32. The method according to claim 31, wherein the method further comprises:
triggering an RRC connection establishment or RRC connection recovery procedure through the higher layer.

33. The method according to claim 29, wherein in a case that the first specific event and/or the second specific event occurs, the method further comprises:
sending the uplink positioning reference signal to the network-side device according to a corresponding configuration of a corresponding new camped-on cell in a pre-configured fifth configuration information.

34. The method according to claim 1, wherein the method further comprises:
determining sixth configuration information of the uplink positioning reference signal based on a second measurement value of a downlink reference signal; and
sending the uplink positioning reference signal to the network-side device based on the sixth configuration information; wherein
the second measurement value comprises at least one of the following:
reference signal received power RSRP of an SSB, paging message, message 2, message 4, and message B;
RSRP of a PRS; and
time difference of arrival TDOA of the PRS.

35. The method according to claim 30, wherein the method further comprises:
in a case that sub-timers of the first timer, sub-timers of the second timer, or sub-timers of the third timer belong to different TAGs, determining the first timer, the second timer, or the third timer in at least one of the following manners:
using a timer of a TAG of a camped-on cell as the first timer, the second timer, or the third timer;
using a timer of a primary timing advance group PTAG as the first timer, the second timer, or the third timer; and
using a timer of a secondary timing advance group STAG as the first timer, the second timer, or the third timer.

36. The method according to claim 29, wherein in a case that the second specific event occurs, the method further comprises at least one of the following:
reporting a subcarrier spacing SCS of the current uplink positioning reference signal;
receiving timing advance information delivered by the network side;
sending third request information to the network-side device, wherein the third request information is used to request the network side to deliver timing advance information; and
sending third indication information to the network-side device, wherein the third indication information is used to indicate a type of a second specific event that occurs on the terminal.

37. The method according to claim 36, wherein the method further comprises:
sending fourth indication information to the network-side device, wherein the fourth indication information is used to indicate whether a camped-on cell has changed and/or whether a configuration resource of an uplink positioning reference signal of an original serving cell, the camped-on cell, or any cell participating in positioning needs to be released.

38. The method according to claim 37, wherein the sending the third request information, the third indication information, and/or the fourth indication information to the network-side device comprises at least one of the following:
sending the third request information, the third indication information, and/or the fourth indication information to the network-side device by using a specific preamble;
sending the third request information, the third indication information, and/or the fourth indication information to the network-side device through a message 3;
sending the third request information, the third indication information, and/or the fourth indication information to the network-side device through a message A;
sending the third request information, the third indication information, and/or the fourth indication information to the network-side device through uplink SDT; and
sending the third request information, the third indication information, and/or the fourth indication information to the network-side device by using a first uplink resource.

39. The method according to claim 1, wherein the collision rule comprises at least one of the following:
in a case that a periodic uplink positioning reference signal collides with a preamble, discarding the periodic uplink positioning reference signal;
in a case that the periodic uplink positioning reference signal collides with the preamble, discarding the preamble;
in a case that the periodic uplink positioning reference signal collides with a message 3, discarding the periodic uplink positioning reference signal;
in a case that the periodic uplink positioning reference signal collides with the message 3, discarding the message 3;
in a case that the periodic uplink positioning reference signal collides with a message A physical random access channel PRACH, discarding the periodic uplink positioning reference signal;
in a case that the periodic uplink positioning reference signal collides with the message A PRACH, discarding the message A PRACH;
in a case that the periodic uplink positioning reference signal collides with a message A PUSCH, discarding the periodic uplink positioning reference signal;
in a case that the periodic uplink positioning reference signal collides with the message A PUSCH, discarding the message A PUSCH;
in a case that the periodic uplink positioning reference signal collides with a message A, discarding the periodic uplink positioning reference signal;
in a case that the periodic uplink positioning reference signal collides with the message A, discarding the message A;
in a case that the periodic uplink positioning reference signal collides with uplink SDT, discarding the periodic uplink positioning reference signal;
in a case that the periodic uplink positioning reference signal collides with the uplink SDT, discarding the uplink SDT;
in a case that an aperiodic uplink positioning reference signal collides with a preamble, discarding the aperiodic uplink positioning reference signal;
in a case that the aperiodic uplink positioning reference signal collides with the preamble, discarding the preamble;
in a case that the aperiodic uplink positioning reference signal collides with a message 3, discarding the aperiodic uplink positioning reference signal;
in a case that the aperiodic uplink positioning reference signal collides with the message 3, discarding the message 3;
in a case that the aperiodic uplink positioning reference signal collides with a message A PRACH, discarding the aperiodic uplink positioning reference signal;
in a case that the aperiodic uplink positioning reference signal collides with the message A PRACH, discarding the message A PRACH;
in a case that the aperiodic uplink positioning reference signal collides with a message A PUSCH, discarding the aperiodic uplink positioning reference signal;
in a case that the aperiodic uplink positioning reference signal collides with the message A PUSCH, discarding the message A PUSCH;
in a case that the aperiodic uplink positioning reference signal collides with a message A, discarding the aperiodic uplink positioning reference signal;
in a case that the aperiodic uplink positioning reference signal collides with the message A, discarding the message A;
in a case that the aperiodic uplink positioning reference signal collides with uplink SDT, discarding the aperiodic uplink positioning reference signal;
in a case that the aperiodic uplink positioning reference signal collides with the uplink SDT, discarding the uplink SDT;
in a case that a semi-persistent uplink positioning reference signal collides with a preamble, discarding the semi-persistent uplink positioning reference signal;
in a case that the semi-persistent uplink positioning reference signal collides with the preamble, discarding the preamble;
in a case that the semi-persistent uplink positioning reference signal collides with a message 3, discarding the semi-persistent uplink positioning reference signal;
in a case that the semi-persistent uplink positioning reference signal collides with the message 3, discarding the message 3;
in a case that the semi-persistent uplink positioning reference signal collides with a message A PRACH, discarding the semi-persistent uplink positioning reference signal;
in a case that the semi-persistent uplink positioning reference signal collides with the message A PRACH, discarding the message A PRACH;
in a case that the semi-persistent uplink positioning reference signal collides with a message A PUSCH, discarding the semi-persistent uplink positioning reference signal;
in a case that the semi-persistent uplink positioning reference signal collides with the message A PUSCH, discarding the message A PUSCH;
in a case that the semi-persistent uplink positioning reference signal collides with a message A, discarding the semi-persistent uplink positioning reference signal;
in a case that the semi-persistent uplink positioning reference signal collides with the message A, discarding the message A;
in a case that the semi-persistent uplink positioning reference signal collides with uplink SDT, discarding the semi-persistent uplink positioning reference signal;
in a case that the semi-persistent uplink positioning reference signal collides with the uplink SDT, discarding the uplink SDT; and
performing judgment based on priorities of an uplink positioning reference signal, a target signal, a target channel, or target data, and discarding a lower-priority target signal, target channel, or target data.

40. A non-connected-state positioning method, wherein the method is executed by a network-side device, and the method comprises:
sending first configuration information and/or second configuration information of an uplink positioning reference signal to a terminal;
and/or
sending activation related information of an uplink positioning reference signal to a terminal, wherein the activation related information comprises activation information and/or deactivation information.

41. The method according to claim 40, wherein the first configuration information and the second configuration information belong to different standard versions, or the first configuration information and the second configuration information are uplink positioning reference signal configuration information in different RRC connection states.

42. The method according to claim 40, wherein the first configuration information and/or the second configuration information comprises at least one of the following:
resource set identification information;
resource identification information;
time domain type information;
the number of symbols;
frequency domain interval information;
time domain information;
frequency domain information;
frequency hopping information;
sequence information;
repetition factor information;
first resource information, comprising resource information of 4-step CBRA, resource information of 4-step CFRA, and/or resource information for indicating UE to request for a POS resource;
second resource information, comprising resource information of 2-step CBRA, resource information of 2-step CFRA, and/or resource information for indicating UE to request for a POS resource; and
SDT resource information specific to the terminal.

43. The method according to claim 40, wherein the activation information comprises at least one of the following:
first indication information used to indicate sending the uplink positioning reference signal;
absolute time information for sending the uplink positioning reference signal; and
time domain offset information between a sending time of the uplink positioning reference signal and the first indication information; and
the deactivation information comprises at least one of the following:
second indication information used to indicate stopping sending the uplink positioning reference signal;
absolute time information for stopping sending the uplink positioning reference signal;
time domain offset information between a transmission stop time of the uplink positioning reference signal and the first indication information; and
time domain offset information between a transmission stop time of the uplink positioning reference signal and the second indication information.

44. The method according to claim 40, wherein the method further comprises:
receiving at least one of the following from the terminal:
first request information, used to request the network-side device to send the first configuration information and/or the second configuration information;
second request information, used to request the network-side device to send the activation related information;
third request information, used to request the network side to deliver timing advance information;
third indication information, used to indicate a type of a second specific event that occurs on the terminal; and
fourth indication information, used to indicate whether a camped-on cell has changed and/or whether a configuration resource of an uplink positioning reference signal of an original serving cell, the camped-on cell, or any cell participating in positioning needs to be released.

45. The method according to claim 44, wherein the method further comprises:
receiving first information from the terminal; and
updating timing advance information based on the first information; wherein
the first information comprises at least one of the following:
preamble
message 3;
message A;
uplink SDT; and
uplink positioning reference signal.

46. The method according to claim 45, wherein the method further comprises:
in a case that the network side updates the timing advance information, sending fifth indication information to a neighboring cell, wherein the fifth indication information is used to indicate the updated timing advance information.

47. The method according to claim 46, wherein the method further comprises:
in a case that at least one of the first request information, the second request information, the third request information, the third indication information, and the fourth indication information is received from the terminal or the network side has updated the timing advance information, sending sixth indication information to the original serving cell, camped-on cell, or any cell participating in positioning, wherein the sixth indication information is used to indicate whether the configuration resource of the uplink positioning reference signal of the original serving cell, camped-on cell, or any cell participating in positioning needs to be released.

48. The method according to claim 41, wherein the method further comprises:
during sending of the first configuration information and/or the second configuration information of the uplink positioning reference signal to the terminal, sending updated first configuration information and/or updated second configuration information to a neighboring cell.

49. A non-connected-state positioning apparatus, wherein the apparatus is applied to a terminal and the apparatus comprises:
a first receiving module, configured to receive first configuration information and/or second configuration information of an uplink positioning reference signal from a network-side device;
and/or
a second receiving module, configured to receive activation related information of an uplink positioning reference signal from the network-side device, wherein the activation related information comprises activation information and/or deactivation information;
and/or
a first determining module, configured to determine a collision rule for an uplink positioning reference signal.

50. A non-connected-state positioning apparatus, wherein the apparatus is applied to a network-side device and the apparatus comprises:
a first sending module, configured to send first configuration information and/or second configuration information of an uplink positioning reference signal to a terminal;
and/or
a second sending module, configured to send activation related information of an uplink positioning reference signal to a terminal, wherein the activation related information comprises activation information and/or deactivation information.

51. A terminal, comprising a processor, a memory, and a program or instructions stored in the memory and capable of running on the processor, wherein when the program or instructions are executed by the processor, the steps of the non-connected-state positioning method according to any one of claims 1 to 39 are implemented.

52. A network-side device, comprising a processor, a memory, and a program or instructions stored in the memory and capable of running on the processor, wherein when the program or instructions are executed by the processor, the steps of the non-connected-state positioning method according to any one of claims 40 to 48 are implemented.

53. A readable storage medium, wherein the readable storage medium stores a program or instructions, and when the program or the instructions are executed by a processor, the steps of the non-connected-state positioning method according to any one of claims 1 to 39 are implemented, or the steps of the non-connected-state positioning method according to any one of claims 40 to 48 are implemented.

54. A chip, comprising a processor and a communication interface, wherein the communication interface is coupled to the processor, and the processor is configured to execute a program or instructions to implement the steps of the non-connected-state positioning method according to any one of claims 1 to 39 or the steps of the non-connected-state positioning method according to any one of claims 40 to 48.

55. A computer program product, wherein the program product is stored in a non-transitory storage medium, and the program product is executed by at least one processor to implement the steps of the non-connected-state positioning method according to any one of claims 1 to 39 or the steps of the non-connected-state positioning method according to any one of claims 40 to 48.

56. A communication device, configured to perform the steps of the non-connected-state positioning method according to any one of claims 1 to 39, or configured to perform the steps of the non-connected-state positioning method according to any one of claims 40 to 48.
